(19) Europäisches Patentamt / European Patent Office / Office européen des brevets

(11) **EP 4 734 642 A1**

(12) **EUROPEAN PATENT APPLICATION**
published in accordance with Art. 153(4) EPC

(43) Date of publication:
**29.04.2026  Bulletin 2026/18**

(21) Application number: **24852410.0**

(22) Date of filing: **09.08.2024**

(51) International Patent Classification (IPC):
*H04W 72/232* (2023.01)    *H04L 5/00* (2006.01)
*H04W 72/21* (2023.01)    *H04W 72/1268* (2023.01)

(52) Cooperative Patent Classification (CPC):
**H04L 5/00; H04W 72/1268; H04W 72/21; H04W 72/232**

(86) International application number:
**PCT/KR2024/011909**

(87) International publication number:
**WO 2025/034057 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **09.08.2023  KR 20230104107**
**22.08.2023  US 202363534018 P**

(71) Applicants:
• **Hyundai Motor Company**
**Seoul 06797 (KR)**
• **Kia Corporation**
**Seoul 06797 (KR)**

(72) Inventors:
• **HONG, Ui Hyun**
**Hwaseong-si Gyeonggi-do 18280 (KR)**
• **SUH, Young Kil**
**Hwaseong-si Gyeonggi-do 18280 (KR)**
• **LEE, Jeong Su**
**Hwaseong-si Gyeonggi-do 18280 (KR)**
• **HAHN, Gene Back**
**Hwaseong-si Gyeonggi-do 18280 (KR)**

(74) Representative: **Isarpatent**
**Patent- und Rechtsanwälte PartG mbB**
**Friedrichstraße 31**
**80801 München (DE)**

(54) **METHOD AND APPARATUS FOR SWITCHING UPLINK SIGNAL TRANSMISSION SCHEME IN WIRELESS COMMUNICATION SYSTEM**

(57)    The present disclosure relates to determining a method for transmitting an uplink signal in a wireless communication system, and the method performed by a terminal comprises receiving at least one radio resource control (RRC) parameter and at least one of downlink control information (DCI) from a transmission reception point (TRP), determining an uplink signal transmission scheme as one of single-DCI based transmission scheme and multi-DCI based transmission scheme based on the at least one RRC parameter, and transmitting an uplink signal to the TRP according to the determined uplink signal transmission scheme, wherein the uplink signal transmission scheme may be determined as the multi-DCI based transmission scheme in a case in which the at least one RRC parameter configures use of two sounding reference signal (SRS) resource sets and includes two indexes indicating different control resource set (CORESET) pools and an SRS resource set indicator is omitted in the at least one of DCI.

FIG. 21

```
          START
            |
            v                            S2110
+------------------------------------------+
|  RECEIVE AT LEAST ONE RRC PARAMETER      |
|     AND AT LEAST ONE DCI FROM TRP        |
+------------------------------------------+
            |
            v                            S2120
+------------------------------------------+
| DETERMINE UPLINK SIGNAL TRANSMISSION     |
|  SCHEME AS ONE OF SINGLE DCI-BASED       |
|   TRANSMISSION SCHEME AND MULTI          |
|    DCI-BASED TRANSMISSION SCHEME         |
|  BASED ON AT LEAST ONE RRC PARAMETER     |
+------------------------------------------+
            |
            v                            S2130
+------------------------------------------+
| TRANSMIT UPLINK SIGNAL TO TRP ACCORDING  |
| TO DETERMINED UPLINK SIGNAL TRANSMISSION |
|              SCHEME                       |
+------------------------------------------+
            |
            v
           END
```

## Description

### Technical Field

The present disclosure relates to an apparatus and method for switching an uplink signal transmission scheme in a wireless communication system.

### Background Art

A communication network (e.g., a 5G communication network or a 6G communication network) is being developed to provide a more advanced communication service compared to an existing communication network (e.g., long term evolution (LTE) or LTE-advanced (A)). The 5G communication network (e.g., a new radio (NR) communication network) may support not only a frequency band at or below 6 GHz but also a frequency band above 6 GHz. That is, the 5G communication network may support the FR1 band and/or the FR2 band. The 5G communication network may provide various communication services and scenarios compared to the LTE communication network. For example, the usage scenarios of the 5G communication network may include enhanced mobile broadband (eMBB), ultra reliable low latency communication (URLLC), massive machine type communication (mMTC), and the like.

A 6G communication network may provide various communication services and scenarios compared to the 5G communication network. The 6G communication network may satisfy requirements of ultra-performance, ultra-bandwidth, ultra-coverage, ultra-precision, ultra-intelligence, and/or ultra-reliability. The 6G communication network may support diverse and wide frequency bands and may be applied to various usage scenarios (e.g., terrestrial communication, non-terrestrial communication, sidelink communication, and the like).

Meanwhile, in 5G NR, the multiple transmission and reception point (MTRP) technology refers to a technique in which a base station (e.g., a gNB) performs communication with a terminal by utilizing a plurality of transmission reception points (TRPs) that are physically separated. The MTRP technique may solve the problem that the quality of service (QoS) is degraded since a terminal located at a cell edge is far away from a base station, as well as the problem of inter-cell interference received from base stations located in different cells. In addition, the MTRP technique may provide an additional communication path from a base station as a non line-of-sight (NLOS) path in a millimeter wave band where an LOS path from the base station is limited.

Beam management for a TRP in 5G NR may be defined as a set of L1/L2 procedures in which an optimal beam for transmission and reception at each of the TRP and a terminal is found or maintained. In particular, for beam management related to analog beamforming, a transmission configuration index (TCI) has been introduced to configure a terminal's reception beam for a specific channel/signal such as a PDSCH, a CSI-RS, and a PDCCH. The TCI has been introduced to dynamically indicate quasi-colocation (QCL) information through downlink control information (DCI) at a base station.

On the other hand, recently a case is being considered in which not only a base station but also a terminal has two or more panels. When a terminal has a plurality of panels, a channel measurement result for beam management needs to be reported in panel units of the terminal. However, such a method has not been proposed yet. Accordingly, a method of reporting a channel measurement result according to each panel in a terminal is required.

Meanwhile, the technologies that are described in the Background section are written to improve the understanding of the background of the present disclosure and may include content that is not already known to those of ordinary skill in the art to which the present disclosure belongs.

### Disclosure

### Technical Problem

The present disclosure may provide an apparatus and method for configuring transmission of an uplink signal in a multi-DCI based multi-panel simultaneous transmission scheme based on an RRC parameter in a wireless communication system.

The present disclosure may provide an apparatus and a method for efficiently switching a transmission scheme in transmitting a multi-DCI based uplink signal based on an RRC parameter in a wireless communication system.

The present disclosure may provide an apparatus and a method for efficiently switching a transmission scheme in transmitting a single-DCI based uplink signal based on an RRC parameter in a wireless communication system.

The technical objects to be achieved in the present disclosure are not limited to the matters mentioned above, and other technical tasks not mentioned may be considered by those skilled in the art to which the technical configuration of the present disclosure is applied from the embodiments of the present disclosure to be described below.

**Technical Solution**

As an example of the present disclosure, a method for operating a terminal in a wireless communication system includes receiving at least one radio resource control (RRC) parameter and at least one of downlink control information (DCI) from a transmission reception point (TRP), determining an uplink signal transmission scheme as one of single-DCI based transmission scheme and multi-DCI based transmission scheme based on the at least one RRC parameter, and transmitting an uplink signal to the TRP according to the determined uplink signal transmission scheme, wherein the uplink signal transmission scheme may be determined as the multi-DCI based transmission scheme in a case in which the at least one RRC parameter configures use of two sounding reference signal (SRS) resource sets and includes two indexes indicating different control resource set (CORESET) pools and an SRS resource set indicator is omitted in the at least one of DCI.

Here, the at least one RRC parameter may further include a parameter that indicates the uplink signal transmission scheme as the multi-DCI based transmission scheme.

Here, when the at least one RRC parameter does not include the indexes indicating different CORESET pools, the uplink signal transmission scheme may be determined as the single-DCI based transmission scheme.

Here, the two indexes indicating different CORESET pools are associated with the two SRS resource sets.

Here, the at least one of DCI may schedule different physical uplink shared channels (PUSCHs).

Here, the uplink signal may be transmitted according to a codebook-based transmission scheme or a non-codebook based transmission scheme.

As an example of the present disclosure, a method for operating a TRP in a wireless communication system includes transmitting at least one RRC parameter and at least one of DCI to a terminal and receiving an uplink signal from the terminal, wherein the uplink signal may be transmitted according to an uplink signal transmission scheme that is determined as one of single DCI-based transmission scheme and multi DCI-based transmission scheme based on the at least one RRC parameter and the at least one of DCI, and the uplink signal transmission scheme may be determined as the multi DCI-based transmission scheme in a case in which the at least one RRC parameter configures use of two SRS resource sets and includes two indexes indicating different CORESET pools and an SRS resource set indicator is omitted in the at least one of DCI.

Here, the at least one RRC parameter may further include a parameter that indicates the uplink signal transmission scheme as the multi-DCI based transmission scheme.

Here, when the at least one RRC parameter does not include the indexes indicating different CORESET pools, the uplink signal may be transmitted by the single DCI-based transmission scheme.

Here, the two indexes indicating different CORESET pools are associated with the two SRS resource sets.

Here, the at least one of DCI may schedule different physical uplink shared channels (PUSCHs).

Here, the uplink signal may be transmitted according to a codebook-based transmission scheme or a non-codebook based transmission scheme.

As an example of the present disclosure, a terminal in a wireless communication system includes at least one transmitter, at least one receiver, at least one processor, and at least one memory operably coupled to the at least one processor and storing instructions that cause, when executed, the at least one processor to perform a specific operation, wherein the specific operation may include receiving at least one RRC parameter and at least one of DCI from a TRP, determining an uplink signal transmission scheme as one of single-DCI based transmission scheme and multi-DCI based transmission scheme based on the at least one RRC parameter, and transmitting an uplink signal to the TRP according to the determined uplink signal transmission scheme, and the uplink signal transmission scheme may be determined as the multi-DCI based transmission scheme in a case in which the at least one RRC parameter configures use of two sounding reference signal (SRS) resource sets and includes two indexes indicating different control resource set (CORESET) pools, and an SRS resource set indicator is omitted in the at least one of DCI.

As an example of the present disclosure, a TRP operating in a wireless communication system includes at least one transmitter, at least one receiver, at least one processor, and at least one memory operably coupled to the at least one processor and storing instructions that cause, when executed, the at least one processor to perform a specific operation, wherein the specific operation may include transmitting at least one RRC parameter and at least one of DCI to a terminal and receiving an uplink signal from the terminal, and the uplink signal may be transmitted according to an uplink signal transmission scheme that is determined as one of single DCI-based transmission scheme and multi DCI-based transmission scheme based on the at least one RRC parameter and the at least one of DCI, and the uplink signal transmission scheme may be determined as the multi DCI-based transmission scheme in a case in which the at least one RRC parameter configures use of two SRS resource sets and includes two indexes indicating different CORESET pools and an SRS resource set indicator is omitted in the at least one of DCI.

The above-described aspects of the present disclosure are merely some of the preferred embodiments of the present disclosure, and various embodiments in which technical features of the present disclosure are reflected may be derived and understood by those skilled in the art based on the detailed description of the present disclosure to be described below.

## Advantageous Effects

According to embodiments based on the present disclosure, there may be the following effects.

According to the present disclosure, it is possible to configure transmission of an uplink signal in a multi-DCI based multi-panel simultaneous transmission scheme based on an RRC parameter in a wireless communication system.

According to the present disclosure, the present disclosure may efficiently switch a transmission scheme of an uplink signal based on an RRC parameter in a wireless communication system.

The effects obtainable from the embodiments of the present disclosure are not limited to those described above, and other effects not specified herein may be clearly derived and understood by those skilled in the art from the following description of the embodiments of the present disclosure. That is, unintended effects resulting from the implementations described in the present disclosure may also be derived by those skilled in the art from the embodiments of the present disclosure.

## Description of Drawings

The drawings attached below are provided to assist in the understanding of the present disclosure and, together with the detailed description, may illustrate embodiments of the present disclosure. However, the technical features of the present disclosure are not limited to any particular drawing, and the features disclosed in each drawing may be combined with one another to constitute new embodiments. Reference numerals in each drawing may indicate structural elements.

FIG. 1 is a conceptual diagram illustrating an embodiment of a communication system.

FIG. 2 is a block diagram illustrating an embodiment of a communication node constituting a communication system.

FIG. 3 is a block diagram illustrating embodiments of wireless devices that perform communication.

FIG. 4A is a block diagram illustrating an embodiment of a transmission path.

FIG. 4B is a block diagram illustrating an embodiment of a reception path.

FIG. 5 is a conceptual diagram illustrating an embodiment of a system frame in a communication system.

FIG. 6 is a conceptual diagram illustrating an embodiment of a sub frame in a communication system.

FIG. 7 is a conceptual diagram illustrating an embodiment of a slot in a communication system.

FIG. 8 is a conceptual diagram illustrating an embodiment of a time-frequency resource in a communication system.

FIG. 9 illustrates an example of a QCL relationship between reference signals that are applicable to the present disclosure.

FIG. 10 illustrates an example of a procedure of collectively configuring a beam for multiple channels or reference signals through a unified TCI state according to an embodiment of the present disclosure.

FIG. 11 illustrates an example of a procedure of configuring each layer for delivering a TCI state in an M-TRP structure according to an embodiment of the present disclosure.

FIG. 12 illustrates an example of a procedure of transmitting an uplink signal according to an embodiment of the present disclosure.

FIG. 13 illustrates an example of a procedure of transmitting an uplink signal according to an embodiment of the present disclosure.

FIG. 14 illustrates an example of a procedure of determining a transmission scheme of a single-DCI based uplink signal according to an embodiment of the present disclosure.

FIG. 15 illustrates an example of a procedure of determining a DCI-based transmission scheme of an uplink signal according to an embodiment of the present disclosure.

FIG. 16 illustrates an example of a procedure of determining a transmission scheme of a multi-DCI based uplink signal according to an embodiment of the present disclosure.

FIG. 17 illustrates an example of a procedure of determining repeated transmission of an uplink signal according to an embodiment of the present disclosure.

FIG. 18 illustrates an example of a procedure of transmitting an uplink signal according to an embodiment of the present disclosure.

FIG. 19 illustrates an example of a procedure of determining whether to switch a DCI-based transmission scheme of an uplink signal according to an embodiment of the present disclosure.

FIG. 20 illustrates an example of a procedure of determining whether to switch a transmission scheme of an uplink signal according to an embodiment of the present disclosure.

FIG. 21 illustrates an example of a procedure of determining a transmission scheme of an uplink signal according to an embodiment of the present disclosure.

**Mode for Invention**

The present disclosure may be subject to various modifications and have various embodiments, and specific embodiments will be exemplified and described in the accompanying drawings. However, the embodiments are not intended to limit the technical scope of the present disclosure, and it is to be understood that the present disclosure covers various modifications, equivalents, and alternatives within the scope and idea of the present disclosure.

Terms such as "first" and "second" may be used to describe various components, not limiting the components. The terms are used only to distinguish one component from another component. For example, a first component may be referred to as a second component and vice versa without departing from the scope of the present disclosure. Term "and/or" may cover a combination of a plurality of related items described herein or any one of the plurality of related items.

In the present disclosure, "at least one of A and B" may mean "at least one of A or B" or "at least one of combinations of one or more of A and B." In addition, in the present disclosure, "one or more of A and B" may mean "one or more of A or B" or "one or more of combinations of one or more of A and B."

In the present disclosure, (re)transmission may mean "transmission," "retransmission," or "transmission and retransmission," (re)configuration may mean "configuration," "reconfiguration," or "configuration and reconfiguration," (re) connection may mean "connection," "reconnection," or "connection and reconnection," and (re)access may mean "access," "re-access," or "access and re-access."

When a component is described as being "connected" or "linked" to another component, the former component may be directly connected or linked to the latter component, but there may be still another component disposed there between. On the other hand, when a component is described as being "directly connected" or "directly linked" to another component, it should be understood that there is no other component disposed there between.

The terms used in the present disclosure are provided to describe merely specific embodiments, not intended to limit the present disclosure. A singular expression includes a plural expression unless the context clearly indicates otherwise. In the present disclosure, the term "include" or "have" signifies the presence of a feature, a number, a step, an operation, a component, a part, or a combination thereof, not excluding the presence or addition of one or more other features, numbers, steps, operations, components, parts, or a combination thereof.

Unless otherwise defined, all terms used herein, including technical or scientific ones, have the same meanings as conventionally understood by those skilled in the art to which the present disclosure belongs. Terms defined in dictionaries that are conventionally used are interpreted as having meanings consistent with contextual meanings of the related art, and unless specifically defined otherwise in the present disclosure, are not interpreted as having ideal or excessively formal meanings.

Hereinafter, with reference to the accompanying drawings, preferred embodiments of the present disclosure will be described in more detail. In describing the present disclosure, in order to facilitate overall understanding, the same reference numerals are used for the same components in the drawings, and redundant descriptions of the same components are omitted. Not only embodiments explicitly described in the present disclosure, but also operations according to combinations of embodiments, extensions of embodiments, and/or modifications of embodiments may be performed. Performance of some operations may be omitted, and an order of performing operations may be changed.

In an embodiment, when a method (e.g., transmission or reception of a signal) performed in a first communication node among communication nodes is described, a second communication node corresponding to it may perform a method (e.g., reception or transmission of a signal) corresponding to the method performed in the first communication node. That is, when an operation of a UE is described, a station corresponding to it may perform an operation corresponding to the operation of the UE. On the other hand, when an operation of a station is described, a UE corresponding to it may perform an operation corresponding to the operation of the station.

A base station may be referred to as a No Deb, an evolved No Deb, a next generation node B (node), a gNB, a device, an apparatus, a node, a communication node, a base transceiver station (BTS), a radio remote head (RRH), a transmission reception point (TRP), a radio unit (RU), a road side unit (RSU), a radio transceiver, an access point, an access node, and the like. A UE may be referred to as a terminal, a device, an apparatus, a node, a communication node, an end node, an access terminal, a mobile terminal, a station, a subscriber station, a mobile station, a portable subscriber station, an on-board unit (OBU), and the like.

In the present disclosure, signaling may be at least one of higher layer signaling, MAC signaling, or physical (PHY) signaling. A message used for higher layer signaling may be referred to as a "higher layer message" or a "higher layer signaling message." A message used for MAC signaling may be referred to as a "MAC message" or a "MAC signaling message." A message used for PHY signaling may be referred to as a "PHY message" or a "PHY signaling message." Higher layer signaling may refer to a transceiving operation of system information (e.g., a master information block (MIB), a system information block (SIB)) and/or an RRC message. MAC signaling may refer to a transceiving operation of a MAC control element (CE). PHY signaling may refer to a transceiving operation of control information (e.g., downlink control information (DCI), uplink control information (UCI), sidelink control information (SCI)).

In the present disclosure, "an operation (e.g., a transmission operation) being configured" may mean that "configuration information (e.g., an information element, a parameter) for the corresponding operation" and/or "information indicating performance of the corresponding operation" are signaled. "An information element (e.g., a parameter) being configured" may mean that the corresponding information element is signaled. In the present disclosure, a "signal and/or channel" may mean a signal, a channel, or a "signal and channel," and the signal may be used in the meaning of a "signal and/or channel."

A communication network to which embodiments are applied is not limited to contents described below, and the embodiments may be applied to various communication networks (e.g., a 4G communication network, a 5G communication network, and/or a 6G communication network). Herein, the communication network may be used in the same sense as a communication system.

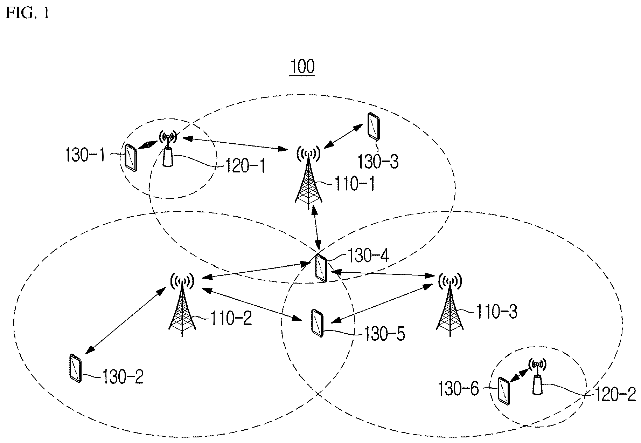

FIG. 1 is a conceptual diagram illustrating an embodiment of a communication system.

Referring to FIG. 1, a communication system 100 may include a plurality of communication nodes 110-1, 110-2, 110-3, 120-1, 120-2, 130-1, 130-2, 130-3, 130-4, 130-5, and 130-6. In addition, the communication system 100 may further include a core network (e.g., serving-gateway (S-GW), packet data network (PD)-gateway (P-GW), and mobility management entity (MME)). When the communication system 100 is a 5G communication system (e.g., a new radio (NR) system), the core network may include an access and mobility management function (AMF), a user plane function (UPF), and a session management function (SMF).

The plurality of communication nodes 110 to 130 may support a communication protocol (e.g., an LTE communication protocol, an LTE-A communication protocol, and an NR communication protocol) supported by the 3rd generation partnership project (3GPP) standard. The plurality of communication nodes 110 to 130 may support the code division multiple access (CDMA) technology, the sideband CDMA (WCDMA) technology, the time division multiple access (TDMA) technology, the frequency division multiple access (FDMA) technology, the orthogonal frequency division multiplexing (OFDM) technology, the filtered OFDM technology, the cyclic prefix (CP)-OFDM technology, the discrete Fourier transform-spread-OFDM (FT-s-OFDM) technology, the single-carrier (SC)-FDMA technology, the non-orthogonal multiple access (NOMA) technology, the generalized frequency division multiplexing (GFDM) technology, the filter bank multi-carrier (FBMC) technology, the universal filtered multi-carrier (UFMC) technology, and the space division multiple access (SDMA) technology. Each of the plurality of communication nodes may have the following structure.

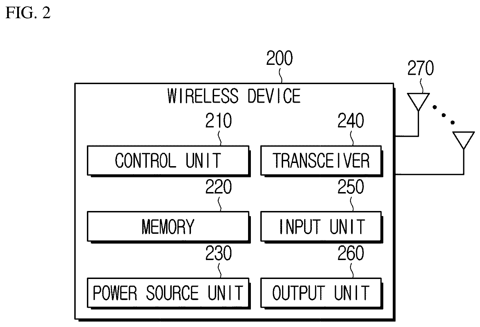

FIG. 2 is a block diagram illustrating an embodiment of a communication node constituting a communication system.

FIG. 2 is a drawing showing an example of a wireless device 200 in a wireless communication system according to an embodiment of the present disclosure. The wireless device 200 according to the embodiment of the present disclosure may be a mobile terminal such as a smart phone, a tablet PC, and a wearable device but may not be limited thereto.

Referring to FIG. 2, the wireless device 200 may include at least one controller 210, at least one memory 220, at least one power supply unit 230, at least one transceiver 240, at least one input unit 250, at least one output unit 260, and/or at least one antenna 270.

The controller 210 may control the memory 220 and/or the transceiver 240 and may be configured to implement a description, a function, a procedure, a proposal, a method and/or an operational flowchart that are disclosed in the present disclosure. The memory 220 may be connected to the controller 210 and store various types of information associated with the operation of the controller 210. For example, the memory 220 may store a software code including instructions for executing a portion or all of controls controlled by the controller 210 or for executing a description, a function, a procedure, a proposal, a method and/or an operational flowchart that are disclosed in the present disclosure. The memory is not formed in any specific limited manner. As an example, the memory 120 may be formed as at least one of a read only memory (ROM) and a random access memory (RAM).

The at least one controller 210 may be referred to as a controller, a micro controller, a microprocessor, or a micro computer. A description, a function, a procedure, a proposal, a method and/or an operational flowchart that are disclosed in the present disclosure may be implemented using firmware or software in the form of a code, an instruction, and/or a set of instructions. Here, the firmware or the software may execute another program such as an OS stored in the memory 220. The controller 210 may be implemented to support a beamforming or directional routing operation in which signals outgoing from the at least one antenna 270 is weighted differently to be effectively steered in a desired direction.

In addition, the at least one controller 210 may be combined with a back haul or network interface. The wireless device 200 may perform communication with another wireless device through the back haul or network interface. The controller 210 may include at least one processor. The processor may be a central processing unit (CPU), a graphics processing unit (GPU), or a dedicated processor that performs methods according to the embodiments of the present disclosure.

The at least one transceiver 240 may be connected to the controller 201 and transmit and/or receive a wireless signal through the at least one antenna 270. The transceiver 240 may include a transmitter and/or a receiver. The at least one transceiver 240 may transmit user data, control information, and a wireless signal/channel, which are mentioned in a method and/or an operational flowchart of the present disclosure, to at least one other device. For example, the at least one transceiver 240 may be connected to the at least one controller 210 and transmit/receive a wireless signal. In addition, the at least one controller 210 may control the at least one transceiver 240 to transmit user data, control information, or a wireless signal to at least one other device. The at least one transceiver 240 may receive a signal transmitted by another wireless device from the at least one antenna 270. In addition, the at least one transceiver 240 may down-convert or up-convert the received signal to generate a baseband signal. The at least one antenna 270 may be a plurality of physical antennas or a plurality of logical antennas (e.g., antenna ports).

The input unit 250 may obtain information such as user input, an image, and audio and include various input devices such as diverse mechanical/electronic input devices, a camera, and a microphone. The output unit 260 aims to generate an output related to vision, hearing, or touch and provide information to a user and may include a display, a speaker, and a vibration module. The wireless device 200 supplies power through the power supply unit 230, and the power supply unit 230 may include a wired/wireless charge circuit and a battery.

Referring to FIG. 1 again, the communication system 100 may include a plurality of base stations 110-1, 110-2, 110-3, 120-1, and 120-2 and a plurality of terminals 130-1, 130-2, 130-3, 130-4, 130-5, and 130-6. Each of the first base station 110-1, the second base station 110-2, and the third base station 110-3 may form a macro cell. Each of the fourth base station 120-1 and the fifth base station 120-2 may form a small cell. The fourth base station 120-1, the third terminal 130-3, and the fourth terminal 130-4 may belong to the cell coverage of the first base station 110-1. The second terminal 130-2, the fourth terminal 130-4, and the fifth terminal 130-5 may belong to the cell coverage of the second base station 110-2. The fifth base station 120-2, the fourth terminal 130-4, the fifth terminal 130-5, and the sixth terminal 130-6 may belong to the cell coverage of the third base station 110-3. The first terminal 130-1 may belong to the cell coverage of the fourth base station 120-1. The sixth terminal 130-6 may belong to the cell coverage of the fifth base station 120-2.

Here, each of the plurality of base stations 110-1, 110-2, 110-3, 120-1, and 120-2 may be referred to as a node B (NB), an evolved No Deb (en B), a gNB, an advanced base station (ABS), a high reliability-base station (HR-BS), a base transceiver station (BTS), a radio base station, a radio transceiver, an access point, an access node, a radio access station (RAS), a mobile multi hop relay-base station (MMR-BS), a relay station (RS), an advanced relay station (ARS), a high reliability-relay station (HR-RS), a home No Deb (HNB), a home Deneb (Hen B), a road side unit (RSU), a radio remote head (RRH), a transmission point (TP), or a transmission and reception point (TRP).

Each of the plurality of terminals 130-1, 130-2, 130-3, 130-4, 130-5, and 130-6 may be referred to as a user equipment (UE), a terminal equipment (TE), an advanced mobile station (AMS), a high reliability-mobile station (HR-MS), a terminal, an access terminal, a mobile terminal, a station, a subscriber station, a mobile station, a portable subscriber station, a node, a device, or an inboard unit (OBU).

Meanwhile, each of the plurality of base stations 110-1, 110-2, 110-3, 120-1, and 120-2 may operate in a different frequency band or operate in the same frequency band. Each of the plurality of base stations 110-1, 110-2, 110-3, 120-1, and 120-2 may be connected to each other via an ideal back haul link or a non-ideal back haul link and exchange information with each other via an ideal back haul link or a non-ideal back haul link. Each of the plurality of base stations 110-1, 110-2, 110-3, 120-1, and 120-2 may be connected to a core network via an ideal back haul link or a non-ideal back haul link. Each of the plurality of base stations 110-1, 110-2, 110-3, 120-1, and 120-2 may transmit a signal received from the core network to the terminals 130-1, 130-2, 130-3, 130-4, 130-5, and 130-6 and transmit a signal received from the terminals 130-1, 130-2, 130-3, 130-4, 130-5, and 130-6 to the core network.

In addition, each of the plurality of base stations 110-1, 110-2, 110-3, 120-1, and 120-2 may support MIMO transmission (e.g., single user (SU)-MIMO, multi user (MU)-MIMO, and massive MIMO), coordinated multi point (Comp) transmission, carrier aggregation (CA) transmission, transmission in an unlicensed band, sidelink communication (e.g., device-to-device (D2D) communication and proximity services (Prose)), Internet of Things (Io) communication, and dual connectivity (DC). Here, each of the plurality of terminals 130-1, 130-2, 130-3, 130-4, 130-5, and 130-6 may perform an operation corresponding to the base stations 110-1, 110-2, 110-3, 120-1, and 120-2 and an operation supported by the base stations 110-1, 110-2, 110-3, 120-1, and 120-2. For example, the second base station 110-2 may transmit a signal to the fourth terminal 130-4 based on a SU-MIMO scheme, and the fourth terminal 130-4 may receive a signal from the second base station 110-2 based on the SU-MIMO scheme. Alternatively, the second base station 110-2 may transmit a signal to the fourth terminal 130-4 and the fifth terminal 130-5 based on the MU-MIMO scheme, and the fourth terminal 130-4 and the fifth terminal 130-5 may each receive a signal from the second base station 110-2 based on the MU-MIMO scheme.

Each of the first base station 110-1, the second base station 110-2, and the third base station 110-3 may transmit a signal to the fourth terminal 130-4 based on a Comp scheme, and the fourth terminal 130-4 may receive a signal from the first base station 110-1, the second base station 110-2, and the third base station 110-3 based on the Comp scheme. Each of the plurality of base stations 110-1, 110-2, 110-3, 120-1, and 120-2 may transmit/receive a signal to/from the terminals 130-1, 130-2, 130-3, 130-4, 130-5, and 130-6 belonging to the cell coverage of each of the base stations based on a CA scheme. Each of the first base station 110-1, the second base station 110-2, and the third base station 110-3 may control sidelink communication with the fourth terminal 130-4 and the fifth terminal 130-5, and each of the fourth terminal 130-4 and the fifth terminal 130-5 may perform sidelink communication under the control of each of the second base station 110-2

and the third base station 110-3.

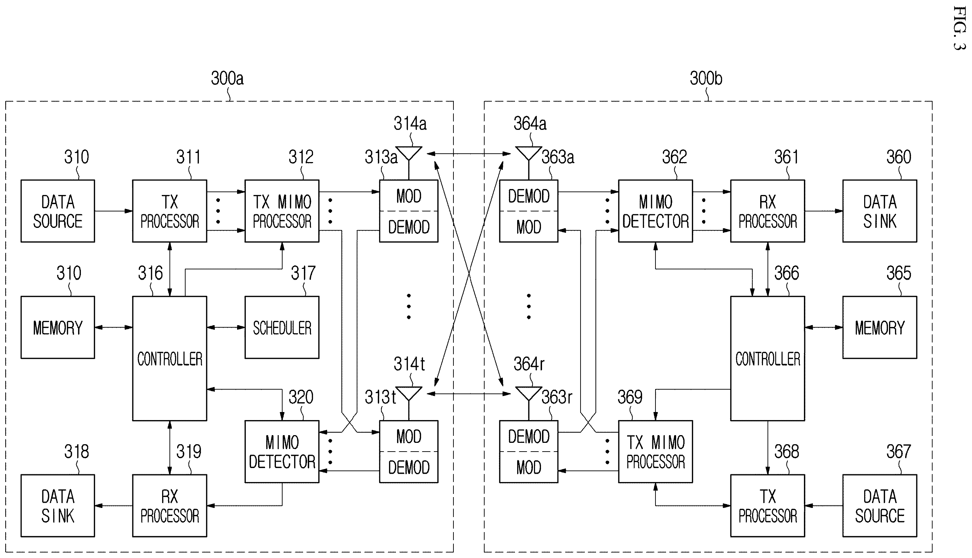

Meanwhile, communication nodes performing communication in a communication network may be configured as follows. A communication node illustrated in FIG. 3 may be a specific embodiment of a wireless device illustrated in FIG. 2.

FIG. 3 is a block diagram illustrating embodiments of wireless devices that perform communication.

Referring to FIG. 3, each of a first wireless device 300a and a second wireless device 300b may be a base station or a UE. The first wireless device 300a may transmit a signal to the second wireless device 300b. A transmission processor 311 included in the first wireless device 300a may receive data (e.g., a data unit) from a data source 310. The transmission processor 311 may receive control information from a controller 316. The control information may include at least one of system information, RRC configuration information (e.g., information configured by RRC signaling), MAC control information (e.g., a MAC CE), or PHY control information (e.g., DCI, SCI).

The transmission processor 311 may generate data symbol(s) by performing a processing operation (e.g., encoding operations, symbol mapping operations, etc.) on data. The transmission processor 311 may generate control symbol(s) by performing a processing operation (e.g., encoding operations, symbol mapping operations, etc.) on control information. In addition, the transmission processor 311 may generate synchronization/reference symbol(s) for a synchronization signal and/or a reference signal.

A TX MIMO processor 312 may perform a spatial processing operation (e.g., a recoding operation) on the data symbol(s), the control symbol(s), and/or the synchronization/reference symbol(s). An output (e.g., a symbol stream) of the TX MIMO processor 312 may be provided to modulators (Mods) included in transceivers 313a to 313t. The modulator (MOD) may generate modulated symbols by performing a processing operation on the symbol stream, and may generate a signal by performing additional processing operations (e.g., analog conversion operations, amplification operations, filtering operations, up-conversion operations) on the modulated symbols. Signals generated by the modulators (Mods) of the transceivers 313a to 313t may be transmitted through antennas 314a to 314t.

Signals transmitted by the first wireless device 300a may be received at antennas 364a to 364r of the second wireless device 300b. The signals received at the antennas 364a to 364r may be provided to demodulators (De Mods) included in transceivers 363a to 363r. The demodulator (DEMOD) may obtain samples by performing a processing operation (e.g., a filtering operation, an amplification operation, a down-conversion operation, a digital conversion operation) on the signal. The demodulator (DEMOD) may obtain symbols by performing an additional processing operation on the samples. A MIMO detector 362 may perform a MIMO detection operation on the symbols. A receive processor 361 may perform a processing operation (e.g., interleaving operations, decoding operations) on the symbols. An output of the receiver processor 361 may be provided to a data sink 360 and a controller 366. For example, data may be provided to the data sink 360, and control information may be provided to the controller 366.

Meanwhile, the second wireless device 300b may transmit a signal to the first wireless device 300a. A transmission processor 368 included in the second wireless device 300b may receive data (e.g., a data unit) from a data source 367 and generate data symbol(s) by performing a processing operation on the data. The transmission processor 368 may receive control information from the controller 366 and generate control symbol(s) by performing a processing operation on the control information. In addition, the transmission processor 368 may generate reference symbol(s) by performing processing operations on a reference signal.

A TX MIMO processor 369 may perform a spatial processing operation (e.g., a recoding operation) on the data symbol(s), the control symbol(s), and/or the reference symbol(s). An output (e.g., a symbol stream) of the TX MIMO processor 369 may be provided to modulators (Mods) included in transceivers 363a to 363t. The modulator (MOD) may generate modulated symbols by performing a processing operation on the symbol stream, and may generate a signal by performing additional processing operations (e.g., analog conversion operations, amplification operations, filtering operations, up-conversion operations) on the modulated symbols. Signals generated by the modulators (Mods) of the transceivers 363a to 363t may be transmitted through antennas 364a to 364t.

Signals transmitted by the second wireless device 300b may be received at antennas 314a to 314r of the first wireless device 300a. The signals received at the antennas 314a to 314r may be provided to demodulators (De Mods) included in transceivers 313a to 313r. The demodulator (DEMOD) may obtain samples by performing a processing operation (e.g., a filtering operation, an amplification operation, a down-conversion operation, a digital conversion operation) on the signal. The demodulator (DEMOD) may obtain symbols by performing an additional processing operation on the samples. A MIMO detector 320 may perform a MIMO detection operation on the symbols. A receive processor 319 may perform a processing operation (e.g., interleaving operations, decoding operations) on the symbols. An output of the receive processor 319 may be provided to a data sink 318 and a controller 316. For example, data may be provided to the data sink 318, and control information may be provided to the controller 316.

Memories 351 to 365 may store data, control information, and/or a program code. A scheduler 317 may perform a scheduling operation for communication. The processors 311, 312, 319, 361, 368 and 369 illustrated in FIG. 3 may be the processor 210 illustrated in FIG. 2 and may be used to perform the methods described in the present disclosure.

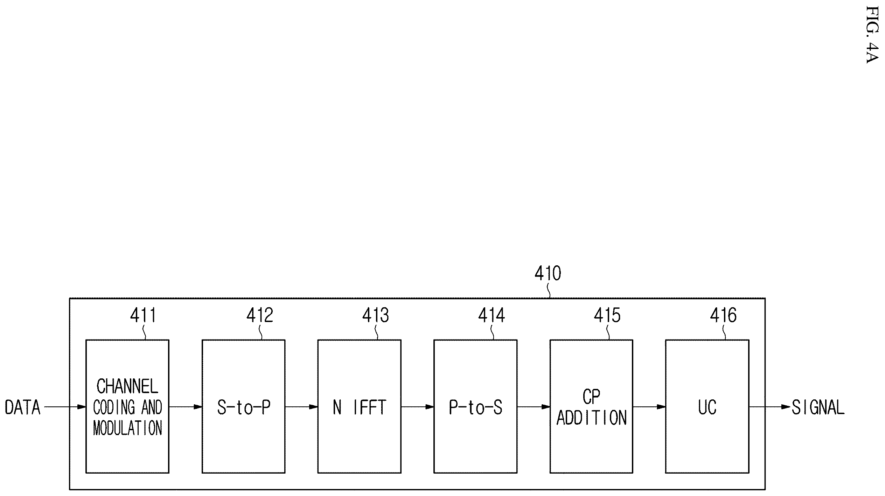

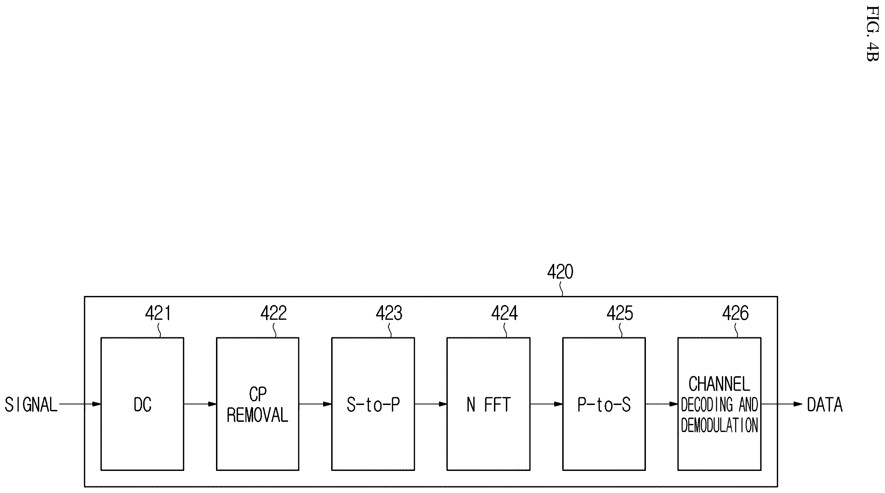

FIG. 4A is a block diagram illustrating an embodiment of a transmission path, and FIG. 4B is a block diagram illustrating an embodiment of a reception path.

Referring to FIG. 4A and FIG. 4B, a transmission path 410 may be implemented in a communication node transmitting a signal, and a reception path 420 may be implemented in a communication node receiving a signal. The transmission path 410 may include a channel coding and modulation block 411, a serial-to-parallel (S-to-P) block 512, an N inverse fast Fourier transform (IFFT) block 413, a parallel-to-serial (P-to-S) block 414, a cyclic prefix (CP) addition block 415, and an up-converter (UC) 416. The reception path 420 may include a down-converter (DC) 421, a CP removal block 422, an S-to-P block 423, an N FFT block 424, a P-to-S block 425, and a channel decoding and demodulation block 426. Here, N may be a natural number.

In the transmission path 410, information bits may be input to the channel coding and modulation block 411. The channel coding and modulation block 411 may perform a coding operation (e.g., a low-density parity check (LDPC) coding operation, a polar coding operation, and the like) and a modulation operation (e.g., quadrature phase shift keying (QPSK), quadrature amplitude modulation (QAM), and the like) on the information bits. An output of the channel coding and modulation block 411 may be a sequence of modulation symbols.

The S-to-P block 412 may convert modulation symbols in a frequency domain into parallel symbol streams to generate N parallel symbol streams. N may be an IFFT size or an FFT size. The N IFFT block 413 may perform an IFFT operation on the N parallel symbol streams to generate signals in a time domain. The P-to-S block 414 may convert an output (e.g., parallel signals) of the N IFFT block 413 into a serial signal to generate a serial signal.

The CP addition block 415 may insert a CP into the signal. The UC 416 may up-convert a frequency of an output of the CP addition block 415 to a radio frequency (RF) frequency. In addition, the output of the CP addition block 415 may be filtered in a baseband before up-conversion.

A signal transmitted in the transmission path 410 may be input to the reception path 420. An operation in the reception path 420 may be a reverse operation of an operation in the transmission path 410. The DC 421 may down-convert a frequency of the received signal to a frequency of a baseband. The CP removal block 422 may remove the CP from the signal. An output of the CP removal block 422 may be a serial signal. The S-to-P block 423 may convert the serial signal into parallel signals. The N FFT block 424 may perform an FFT algorithm to generate N parallel signals. The P-to-S block 425 may convert the parallel signals into a sequence of modulation symbols. The channel decoding and demodulation block 426 may perform a demodulation operation on the modulation symbols and perform a decoding operation on a result of the demodulation operation to recover data.

In FIG. 4A and FIG. 4B, discrete Fourier transform (DFT) and inverse DFT (IDFT) may be used instead of FFT and IFFT. In FIG. 4A and FIG. 4B, each of blocks (e.g., components) may be implemented by at least one of hardware, software, or firmware. For example, in FIG. 4A and FIG. 4B, some blocks may be implemented by software, and remaining blocks may be implemented by hardware or "a combination of hardware and software." In FIG. 4A and FIG. 4B, one block may be subdivided into a plurality of blocks, a plurality of blocks may be integrated into one block, some blocks may be omitted, and a block supporting another function may be added.

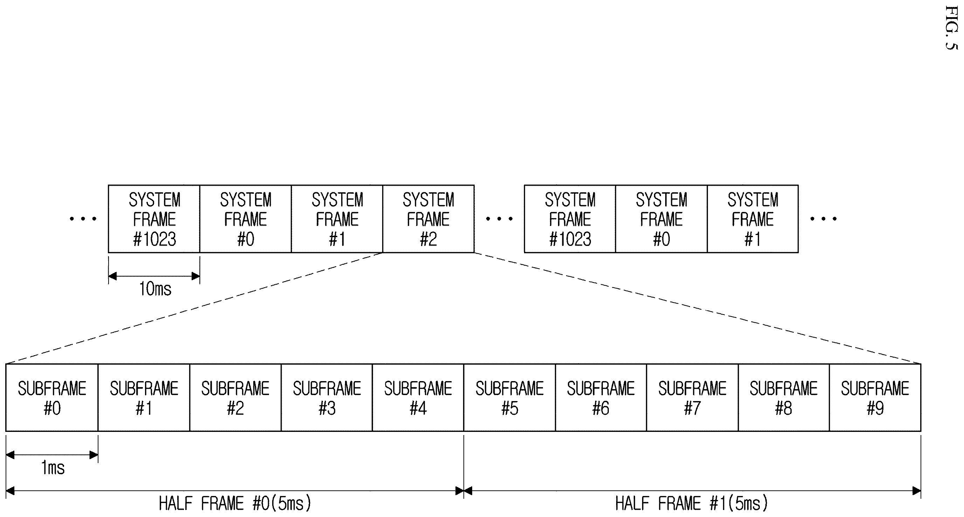

FIG. 5 is a conceptual diagram illustrating an embodiment of a system frame in a communication system.

Referring to FIG. 5, time resources in a communication network may be divided into frames. For example, system frames may be configured consecutively in the time domain of the communication system. Each of the system frames may have a length of 10 milliseconds (ms). System frame numbers (SFNs) may be set to #0 to #1023. In this case, 1024 system frames may be repeated in the time domain of the communication system. For example, an SFN of a system frame after the system frame # 1023 may be #0.

One system frame may include two half frames. The length of one half frame may be 5 ms. A half frame located in a starting region of a system frame may be referred to as a 'half frame #0', and a half frame located in an ending region of the system frame may be referred to as a 'half frame #1'. The system frame may include 10 subframes. The length of one sub frame may be 1 ms. 10 subframes within one system frame may be referred to as 'subframes # 0 to #9'.

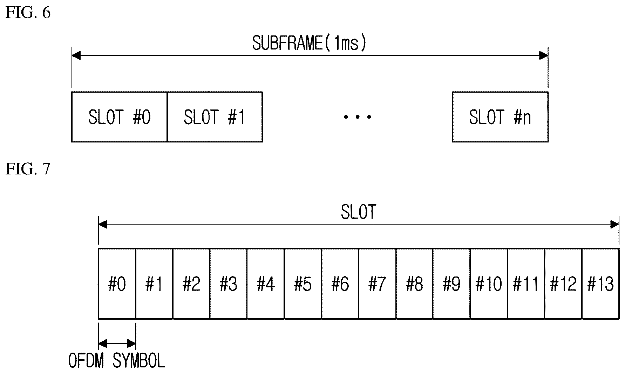

FIG. 6 is a conceptual diagram illustrating an embodiment of a sub frame in a communication system.

Referring to FIG. 6, one sub frame may include n slots, and n may be a natural number. Accordingly, one sub frame may be composed of one or more slots.

FIG. 7 is a conceptual diagram illustrating an embodiment of a slot in a communication system.

Referring to FIG. 7, one slot may include one or more symbols. One slot shown in FIG. 7 may include 14 symbols. The length of the slot may vary depending on the number of symbols included in the slot and the length of the symbol. Alternatively, the length of the slot may vary according to a numerology.

A numerology applied to physical signals and channels in a communication system may be variable. A numerology may be varied to meet various technical requirements of a communication system. In a communication system employing cyclic prefix (CP)-based OFDM waveform technology, a numerology may include subcarrier spacing and CP length (or CP type).

Table 1 may be an embodiment of a method for configuring numerology for a CP-OFDM-based communication system. Depending on a frequency band in which the communication system operates, at least some of the numerologies in Table 1 may be supported. In addition, the communication system may further support one or more numerologies not specified in Table 1.

[Table 1]

| Subcarrier spacing | 15 kHz | 30 kHz | 60 kHz | 120 kHz | 240 kHz | 480 kHz |
|---|---|---|---|---|---|---|
| OFDM symbol length [$\mu$s] | 66.7 | 33.3 | 16.7 | 8.3 | 4.2 | 2.1 |
| CP length [$\mu$s] | 4.76 | 2.38 | 1.19 | 0.60 | 0.30 | 0.15 |
| Number of OFDM symbols within 1 ms | 14 | 28 | 56 | 112 | 224 | 448 |

When a subcarrier spacing is 15 kHz (e.g., $\mu$=0), the length of the slot may be 1 ms. In this case, one system frame may include 10 slots. When a subcarrier spacing is 30 kHz (e.g., $\mu$=1), the length of the slot may be 0.5 ms. In this case, one system frame may include 20 slots.

When a subcarrier spacing is 60 kHz (e.g., $\mu$=2), the length of the slot may be 0.25 ms. In this case, one system frame may include 40 slots. When a subcarrier spacing is 120 kHz (e.g., $\mu$=3), the length of the slot may be 0.125 ms. In this case, one system frame may include 80 slots. When a subcarrier spacing is 240 kHz (e.g., $\mu$=4), the length of the slot may be 0.0625 ms. In this case, one system frame may include 160 slots.

The symbol may be configured as a downlink (DL) symbol, a flexible symbol, or an uplink (UL) symbol. A slot composed only of DL symbols may be referred to as 'DL slot', a slot composed only of FL symbols may be referred to as 'FL slot', and a slot composed only of UL symbols may be referred to as 'UL slot'.

A slot format may be configured semi-statically by higher layer signaling (e.g., radio resource control (RRC) signaling). Information indicating a semi-static slot format may be included in system information, and the semi-static slot format may be configured in a cell-specific manner. In addition, a semi-static slot format may be additionally configured for each terminal through terminal-specific higher layer signaling (e.g., RRC signaling). A flexible symbol of a slot format configured cell-specifically may be overridden by a downlink symbol or an uplink symbol by terminal-specific higher layer signaling. In addition, a slot format may be dynamically indicated by physical layer signaling (e.g., slot format indicator (SFI) included in downlink control information (DCI)). The semi-statically configured slot format may be overridden by a dynamically indicated slot format. For example, a flexible symbol that is semi-statically configured may be overridden by a downlink symbol or an uplink symbol by SFI.

A reference signal may be a channel state information-reference signal (CSI-RS), a sounding reference signal (SRS), a demodulation-reference signal (DM-RS), a phase tracking-reference signal (PT-RS), or the like. A channel may be a physical broadcast channel (PBCH), a physical downlink control channel (PDCCH), a physical downlink shared channel (PDSCH), a physical uplink control channel (PUCCH), a physical uplink shared channel (PUSCH), a physical sidelink control channel (PSCCH), a physical sidelink shared channel (PSSCH), or the like. In the present disclosure, a control channel may refer to a PDCCH, a PUCCH, or a PSCCH, and a data channel may refer to a PDSCH, a PUSCH, or a PSSCH.

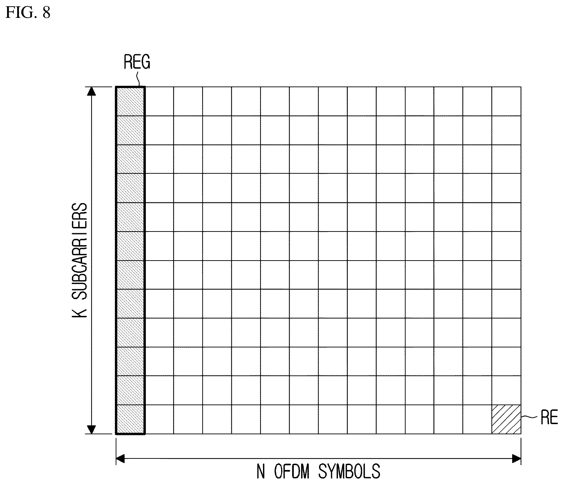

FIG. 8 is a conceptual diagram illustrating an embodiment of a time-frequency resource in a communication system.

Referring to FIG. 8, a resource configured with one symbol (e.g., an OFDM symbol) in the time domain and one subcarrier in the frequency domain may be defined as a 'resource element (RE)'. Resources configured with one OFDM symbol in the time domain and K subcarriers in the frequency domain may be defined as a 'resource element group (REG)'. One REG may include K REs. The REG may be used as a basic unit of resource allocation in the frequency domain. K may be a natural number. For example, K may be 12. N may be a natural number. N in the slot shown in FIG. 7 may be 14. The N OFDM symbols may be used as a basic unit of resource allocation in the time domain.

In the present disclosure, an RB may refer to a common RB (CRB). Alternatively, an RB may refer to a PRB or a virtual RB (VRB). In a communication system, a CRB may refer to an RB constituting a set of consecutive RBs (e.g., common RB grid) based on a reference frequency (e.g., point A). A carrier and/or bandwidth part may be arranged on the common RB grid. That is, a carrier and/or bandwidth part may be composed of CRB(s). An RB or a CRB constituting a bandwidth part may be referred to as a PRB, and a CRB index within the bandwidth part may be appropriately converted into a PRB index.

Downlink data may be transmitted through a PDSCH. A base station may transmit configuration information (e.g. scheduling information) of the PDSCH to a terminal through a PDCCH. The terminal may obtain the configuration information of the PDSCH by receiving the PDCCH (e.g. downlink control information (DCI)). For example, the configuration information of the PDSCH may include a modulation coding scheme (MCS) used for transceiving of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g. DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a upper layer message (e.g. radio resource control (RRC) message). The configuration information for the PDCCH monitoring operation may include control resource set (CORESET) information and search space information.

The CORESET information may include PDCCH demodulation reference signal (DMRS) information, PDCCH precoding information, and PDCCH occasion information, and the like. A PDCCH DMRS may be a DMRS used for demodulating a PDCCH. A PDCCH occasion refers to a region where a PDCCH may potentially exist. That is, the PDCCH occasion may be a region where DCI may be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion may be indicated in RB units (e.g. in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure a bandwidth part (BWP) for downlink communication. The BWP may be configured differently for each terminal. The base station may notify the terminal of BWP configuration information using upper layer signaling. The upper layer signaling may refer to a transmission operation of system information and/or a transmission operation of RRC message. The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of upper layer signaling, a medium access control (MAC) control element (CE), or DCI. The base station may perform downlink communication using the activated BWP(s). The terminal may identify the activated BWP(s) by receiving the configuration information from the base station and perform downlink reception operations on the activated BWP(s).

The multiple transmission and reception point (mTRP) technology in 5G NR refers to a technique the enables a base station (e.g., a gNB) to communicate with a terminal by using physically separated multiple TRPs. By using a plurality of TRPs, the MTRP technique may solve the problem that the quality of service (QoS) is degraded since a terminal located at a cell edge is far away from a base station, as well as the problem of inter-cell interference received from base stations located in different cells. In addition, the MTRP technique may provide an additional communication path from a base station as a non line-of-sight (LOS) path in a millimeter wave band where an LOS path from the base station is limited.

In standards, the MTRP technique is categorized into a coherent joint transmission (CJT) scheme and a non-coherent joint transmission (NCJT) scheme. In the CJT scheme, TRPs cooperate in a synchronized manner based on a reliable back haul link between base stations connected to the TRPs. On the other hand, in the NCJT scheme, scheduling, precoding matrix selection, modulation, and coding schemes are determined without coordination among two or more TRPs supporting a single terminal.

Beam management for a TRP in 5G NR may be defined as a set of L1/L2 procedures in which an optimal beam for transmission and reception at each of the TRP and a terminal is found or maintained. Beam management procedures may be broadly classified into four types as follows.

1) Beam determination
2) Beam measurement
3) Beam reporting
4) Beam sweeping

Here, the TRP and the UE may utilize the reciprocity characteristics of downlink (DL)/uplink (UL) channels during beam management. For example, the UE may utilize the values measured at the receive (Rx) beams of the DL channel when configuring the transmit (TX) beam. In addition, the UE may utilize the values measured at the transmit (TX) beams of the UL channel when configuring the receive (Rx) beam. Even in the case of the base station, these procedures for configuring the transmit beam and the receive beam may be performed in the same manner as in the UE. In particular, a transmission configuration indicator (TCI) has been introduced for beam management related to analog beamforming. The TCI may be used to configure a beam to be used for transmission of a specific channel and/or signal, for example, a PDSCH and/or CSI-RS and/or a PDCCH. The base station may dynamically indicate quasi-colocation (QCL) information to the UE by transmitting TCI through downlink control information (DCI).

When two antenna ports are quasi co-located, it means that the channel characteristic of a symbol delivered from one antenna port may be inferred through the channel of a symbol delivered from the other antenna port. Hereinafter, for convenience of description, two quasi co-located antenna ports will be considered being in a QCL relationship.

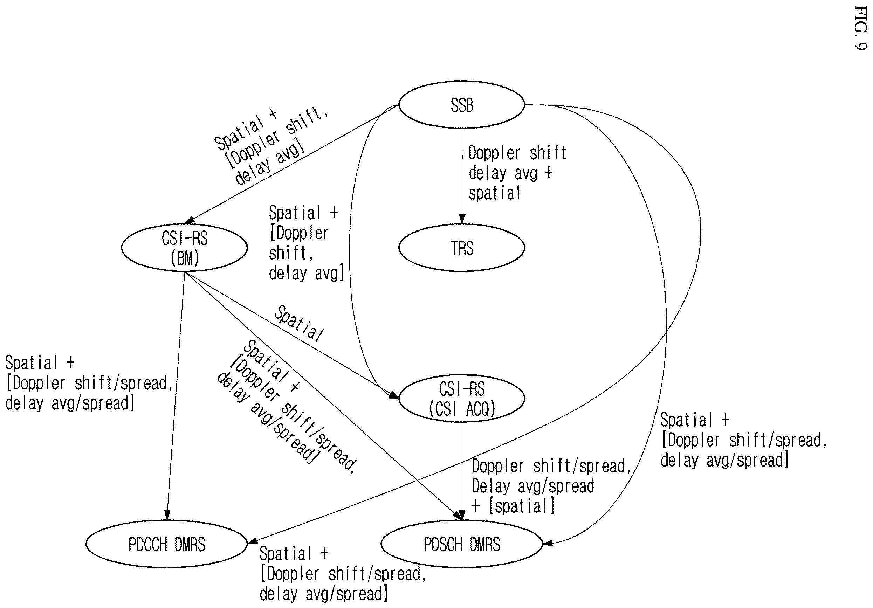

FIG. 9 illustrates an example of a QCL relationship between reference signals that are applicable to the present disclosure.

Referring to FIG. 9, information on a TCI state may be generated by extending and applying a QCL relationship between reference signals in systems below 5G.

A synchronization signal block (SSB) may be used for a terminal to be synchronized with a network and to obtain information. The SSB may be in a QCL relationship with a tracking reference signal (TRS). Accordingly, at least one of the doppler shift, delay average, and spatial characteristic of the SSB may be used to receive the TRS.

Channel state information-reference signal (CSI-RS): a CSI-RS may be used for a network to identify a characteristic of a wireless channel. There may be two types of CSI-RSs. A CSI-RS (CSI ACQ) may be used to receive CSI, and a CSI-RS (BM) may be used for beam management (BM).

An SSB and a CSI-RS (BM) may have a QCL relationship with a CSI-RS (CSI ACQ), and at least one of a doppler shift, a delay average, and a spatial characteristic may be utilized for receiving the CSI-RS (CSI ACK).

A CSI-RS (BM) and an SSB may have a QCL relationship with a physical downlink control channel demodulation reference signal (PDCCH DMRS), and at least one of a doppler shift/spread, an average/spread of delay, and a spatial characteristic may be used to receive the PDCCH DMRS.

An SSB, a CSI-RS (BM), and a CSI-RS(CSI ACQ) may have a QCL relationship with a PDSCH DMRS, and at least one of a doppler shift/spread, an average/spread of delay, and a spatial characteristic may be used to receive the PDCCH DMRS.

3GPP Release 17 introduced a unified TCI framework, that is, a method for TCI configuration using a unified TCI pool, to reduce signaling overhead for QCL configuration of DL and/or UL channels and to simplify multi-beam operation compared to previous releases prior to 3GPP Release 16.

According to the unified TCI framework, a base station may preconfigure a common TCI pool that may be commonly used (or applied) to both DL channels and UL channels, through RRC signaling. Further, according to the unified TCI framework, the base station may directly indicate the TCI for DL channels and UL channels from the configured common TCI pool by using a MAC-CE and/or DCI. In addition, according to the unified TCI framework, the base station may support update for a common TCI state.

The common TCI state may be indicated (or configured) for a plurality of component carriers (CCs). Among the plurality of CCs, a reference CC may be additionally configured, and TCI updates for other CCs present in the indicated list may be performed simultaneously through a TCI update command for the reference CC.

Here, there are three methods of configuring the state of a TCI mainly for a DL channel and a UL channel.

    A. Joint TCI state indication method for common indication for DL/UL channels
    B. DL channel separate TCI state indication method that configures separate TCI for a DL channel
    C. Separate TCI state indication method for separate TCI state indication for an UL channel

From a broader perspective, the above three methods may be categorized into the joint TCI state indication method, in which a common TCI is indicated for both DL and UL channels, and the separate TCI state indication method, in which a TCI is individually configured for each of the DL channel or the UL channel. The fundamental difference between the two categorized methods may lie in whether reciprocity exists between the DL channel and the UL channel.

The unified TCI framework is designed for a single TRP (sTRP) in 3GPP Rel-17. However, in 3GGP Rel-18, the unified TCI framework aims to be extended to a multi-TRP (mTRP) system.

A TCI state may be used to deliver a QCL relationship to a terminal. The TCI state may include information on the QCL relationship and may be delivered through DCI. Section 5.1.5 of 3GPP TS 38.214 defines a procedure for delivering information regarding QCL as follows.

### 5.1.5 Antenna ports quasi co-location

The UE can be configured with a list of up to *M TCI-State* configurations within the higher layer parameter *PDSCH-Config* to decode PDSCH according to a detected PDCCH with DCI intended for the UE and the given serving cell, where M depends on the UE capability *maxNumberConfiguredTCIstatesPerCC*. Each *TCI-State* contains parameters for configuring a quasi co-location relationship between one or two downlink reference signals and the DM-RS ports of the PDSCH, the DM-RS port of PDCCH or the CSI-RS port(s) of a CSI-RS resource. The quasi co-location relationship is configured by the higher layer parameter *qcl-Type1* for the first DL RS, and *qcl-Type2* for the second DL RS (if configured). For the case of two DL RSs, the QCL types shall not be the same, regardless of whether the references are to the same DL RS or different DL RSs. The quasi co-location types corresponding to each DL RS are given by the higher layer parameter *qcl-Type* in *QCL-Info* and may take one of the following values:

- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

The UE can be configured with a list of up to *128 TCI-State* configurations, within the higher layer parameter *dl-OrJointTCI-StateList* in *PDSCH-Config* for providing a reference signal for the quasi co-location for DM-RS of PDSCH and DM-RS of PDCCH in a BWP/CC, for CSI-RS, and to provide a reference, if applicable, for determining UL TX spatial filter for dynamic-grant and configured-grant based PUSCH and PUCCH resource in a BWP/CC, and SRS. If the *TCI-State* or *TCI-UL-State* configurations are absent in a BWP of the CC, the UE can apply the *TCI-State* or *TCI-UL-State* configurations from a reference BWP of a reference CC configured by *unifiedTCI-StateRef*. The UE is not expected to be configured with *tci-StatesToAddModList, SpatialRelationInfo* or *PUCCH-SpatialRelationInfo,* except *SpatialRelationInfoPos* in a CC in a band, if the UE is configured with *dl-OrJointTCI-StateList* or *ul-TCI-StateList* in any CC in the same band. The UE can assume that when the UE is configured with *tci-StatesToAddModList* in any CC in the CC list configured by *simultaneousTCI-UpdateList1-r16, simultaneousTCI-UpdateList2-r16, simultaneousSpatial-UpdatedListl-r16, or simultaneousSpatial-UpdatedList2-r16,* the UE is not configured with *dl-OrJointTCI-StateList* or *ul-TCI-StateList* in any CC within the same band in the CC list. The UE receives an activation command, as described in clause 6.1.3.xx of [10, TS 38.321], 6.1.3.47 of [10, TS 38.321] or 6.1.4.xx of [10, TS 38.321], used to map up to 8 TCI states and/or pairs of TCI states, with one TCI state for DL channels/signals and/or one TCI state for UL channels/signals to the codepoints of the DCI field *'Transmission Configuration Indication'* for one or for a set of CCs/DL BWPs, [and/] or up to 8 sets of TCI states, where each set is comprised of up to two TCI state(s) for DL and UL signals/channels, or up to two TCI state(s) for DL channels/signals and up to two TCI state(s) for UL channels/signals to the codepoints of the DCI field *'Transmission Configuration Indication'* for one or for a set of CCs/DL BWPs, and if applicable, for one or for a set of CCs/UL BWPs. When a set of TCI state IDs are activated for a set of CCs/DL BWPs and if applicable, for a set of CCs/UL BWPs, where the applicable list of CCs is determined by the indicated CC in the activation command, the same set of TCI state IDs are applied for all DL and/or UL BWPs in the indicated CCs. If the activation command maps *TCI-State(s)* and/or *TCI-UL-State(s)* to only one TCI codepoint, the UE shall apply the indicated *TCI-State(s)* and/or *TCI-UL-State(s)* to one or to a set of CCs /DL BWPs, and if applicable, to one or to a set of CCs /UL BWPs once the indicated mapping for the one single TCI codepoint is applied as described in [11, TS 38.133].

When the *bwp-id* or *cell* for QCL-TypeA/D source RS in a QCL-Info of the TCI state is not configured, the UE assumes that QCL-TypeA/D source RS is configured in the CC/DL BWP where TCI state applies.

When *tci-PresentInDCI* is set as 'enabled' or *tci-PresentDCI-1-2* is configured for the CORESET, a UE configured with *dl-OrJointTCI-StateList* with activated *TCI-State* or *ul-TCI-StateList* with activated *TCI-UL-State* receives DCI format 1_1/1_2/1_3 providing indicated *TCI-State(s)* and/or *TCI-UL-State(s)* for a CC or all CCs in the same CC list configured by *simultaneousU-TCI-UpdateList1-r17, simultaneousU-TCI-UpdateList2-r17, simultaneousU-TCI-UpdateList3-r17, simultaneousU-TCI-UpdateList4-r17.* The DCI format 1_1/1_2 can be with or without, if applicable, DL assignment. If the DCI format 1_1/1_2/ is without DL assignment, the UE can assume the following:

- CS-RNTI is used to scramble the CRC for the DCI
- The values of the following DCI fields are set as follows:
  - RV = all '1's

- MCS = all '1's
- NDI = 0
- Set to all '0's for FDRA Type 0, or all '1's for FDRA Type 1, or all '0's for dynamicSwitch (same as in Table 10.2-4 of [6, TS 38.213]).

After a UE receives an initial higher layer configuration of *dl-OrJointTCI-StateList* with more than one *TCI-State* and before application of an indicated TCI state from the configured TCI states:

- The UE assumes that DM-RS of PDSCH and DM-RS of PDCCH and the CSI-RS applying the indicated TCI state are quasi co-located with the SS/PBCH block the UE identified during the initial access procedure

After a UE receives an initial higher layer configuration of *dl-OrJointTCI-StateList* with more than one *TCI-State* or *ul-TCI-StateList* with more than one *TCI-UL-State* and before application of an indicated TCI state from the configured TCI states:

- The UE assumes that the UL TX spatial filter, if applicable, for dynamic-grant and configured-grant based PUSCH and PUCCH, and for SRS applying the indicated TCI state, is the same as that for a PUSCH transmission scheduled by a RAR UL grant or a MsgA PUSCH transmission during the initial access procedure

After a UE receives a higher layer configuration of *dl-OrJointTCI-StateList* with more than one *TCI-State* as part of a Reconfiguration with sync procedure as described in [12, TS 38.331] and before applying an indicated TCI state from the configured TCI states:

- The UE assumes that DM-RS of PDSCH and DM-RS of PDCCH, and the CSI-RS applying the indicated TCI state are quasi co-located with the SS/PBCH block or the CSI-RS resource the UE identified during the random access procedure initiated by the Reconfiguration with sync procedure as described in [12, TS 38.331].

After a UE receives a higher layer configuration of *dl-OrJointTCI-StateList* with more than one *TCI-State* or more than one *TCI-UL-State* as part of a Reconfiguration with sync procedure as described in [12, TS 38.331] and before applying an indicated TCI state from the configured TCI states:

- The UE assumes that the UL TX spatial filter, if applicable, for dynamic-grant and configured-grant based PUSCH and PUCCH, and for SRS applying the indicated TCI state, is the same as that for a PUSCH transmission scheduled by a RAR UL grant or a MsgA PUSCH transmission during random access procedure initiated by the Reconfiguration with sync procedure as described in [12, TS 38.331].

If a UE receives a higher layer configuration of *dl-OrJointTCI-StateList* with a single *TCI-State,* that can be used as an indicated TCI state, the UE obtains the QCL assumptions from the configured TCI state for DM-RS of PDSCH and DM-RS of PDCCH, and the CSI -RS applying the indicated TCI state. If a UE receives a higher layer configuration of *dl-OrJointTCI-StateList* with a single *TCI-State or ul-TCI-StateList* with *a single TCI-UL-State,* that can be used as an indicated TCI state, the UE determines an UL TX spatial filter, if applicable, from the configured TCI state for dynamic-grant and configured-grant based PUSCH and PUCCH, and SRS applying the indicated TCI state.

When a UE configured with *dl-OrJointTCI-StateList* would transmit a PUCCH with positive HARQ-ACK or a PUSCH with positive HARQ-ACK corresponding to the DCI carrying the TCI State indication and without DL assignment, or corresponding to the PDSCH scheduled by the DCI carrying the TCI State indication, and if the indicated TCI State(s) is/are different from the previously indicated one(s), the indicated *TCI-State(s)* and/or *TCI-UL-State(s)* should be applied starting from the first slot that is at least *beamAppTime* symbols after the last symbol of the PUCCH or the PUSCH, and if the UE receives more than one indicated TCI state for a CC/BWP to be applied starting from the first slot that is at least *beamAppTime* symbols after the last symbol of the PUCCH or the PUSCH, the indicated TCI state carried in the latest DCI in time corresponding to positive HARQ-ACK value is applied. The first slot and the *beamAppTime* symbols are both determined on the active BWP with the smallest SCS among the BWP(s) from the CCs applying the indicated *TCI-State(s)* or *TCI-UL-State(s)* that are active at the end of the PUCCH or the PUSCH carrying the positive HARQ-ACK. If a UE is configured with *pdsch-TimeDomainAllocationListForMultiPDSCH* in which one or more rows contain multiple *SLIV*s for PDSCH on a DL BWP of a serving cell, and the UE is receiving a DCI carrying the *TCI-State* indication and without DL assignment, the UE does not expect that the number of indicated *SLIV*s in the row of the *pdsch-TimeDomainAllocationListForMultiPDSCH* by the DCI is more than one.

EP 4 734 642 A1

14

If the UE is configured with *SSB-MTC-AddtionalPCI* and with *PDCCH-Config* that contains two different values of *coresetPoolIndex* in *ControlResourceSet,* the UE receives an activation command for CORESET associated with each *coresetPoolIndex,* as described in clause 6.1.3.14 of [10, TS 38.321] or 6.1.3.xx of [10, TS 38.321], used to map up to 8 TCI states and/or pairs of TCI states, with one TCI state for DL channels/signals and/or one TCI state for UL channels/signals to the codepoints of the DCI field *'Transmission Configuration Indication'* in one CC/DL BWP. When a set of TCI state IDs are activated for a *coresetPoolIndex,* the activated TCI states corresponding to one *coresetPoolIndex* is associated with the serving cell physical cell ID and activated TCI states corresponding to another *coresetPoolIndex* can be associated with another physical cell ID.

When a UE supports two TCI states in a codepoint of the DCI field *'Transmission Configuration Indication'* the UE may receive an activation command, as described in clause 6.1.3.24 of [10, TS 38.321], the activation command is used to map up to 8 combinations of one or two TCI states to the codepoints of the DCI field *'Transmission Configuration Indication'.* The UE is not expected to receive more than 8 TCI states in the activation command.

When the DCI field *'Transmission Configuration Indication'* is present in DCI format 1_2 and when the number of codepoints S in the DCI field *'Transmission Configuration Indication'* of DCI format 1_2 is smaller than the number of TCI codepoints that are activated by the activation command, as described in clause 6.1.3.14, 6.1.3.24 and 6.1.3.47 of [10, TS38.321], only the first S activated codepoints are applied for DCI format 1_2.

When the UE would transmit a PUCCH with HARQ-ACK information in slot n corresponding to the PDSCH carrying the activation command, the indicated mapping between TCI states and codepoints of the DCI field 'Transmission Configuration Indication' should be applied starting from the first slot that is after slot

$$n + 3N_{slot}^{subframe,\mu} + \frac{2^{\mu}}{2^{\mu}K_{mac}} \cdot k_{\text{mac}}$$ where $m$ is the SCS configuration for the PUCCH and $\mu_{Kmac}$ is the subcarrier spacing configuration for $k_{mac}$ with a value of 0 for frequency range 1, and $k_{\text{mac}}$ is provided by K-Mac or $k_{\text{mac}}$ = 0 if K-Mac is not provided. If tci-PresentInDCI is set to 'enabled' or tci-PresentDCI-1-2 is configured for the CORESET scheduling the PDSCH, and the time offset between the reception of the DL DCI and the corresponding PDSCH is equal to or greater than timeDuration-ForQCL if applicable, after a UE receives an initial higher layer configuration of TCI states and before reception of the activation command, the UE may assume that the DM-RS ports of PDSCH of a serving cell are quasi co-located with the SS/PBCH block determined in the initial access procedure with respect to qcl-Type set to 'typeA', and when applicable, also with respect to qcl-Type set to 'typeD'.

If a UE is configured with the higher layer parameter tci-PresentInDCI that is set as 'enabled' for the CORESET scheduling a PDSCH, the UE assumes that the TCI field is present in the DCI format 1_1 or format 1_3 of the PDCCH transmitted on the CORESET. If a UE is configured with the higher layer parameter tci-PresentDCI-1-2 for the CORESET scheduling the PDSCH, the UE assumes that the TCI field with a DCI field size indicated by tci-PresentDCI-1-2 is present in the DCI format 1_2 of the PDCCH transmitted on the CORESET. If a UE is configured with the higher layer parameter tci-PresentInDCI that is set as 'enabled' for the CORESET scheduling the multicast PDSCH, the UE assumes that the TCI field is present in the DCI format 4_2 of the PDCCH transmitted on the CORESET. If the PDSCH is scheduled by a DCI format not having the TCI field present, and the time offset between the reception of the DL DCI and the corresponding PDSCH of a serving cell is equal to or greater than a threshold timeDurationForQCL if applicable, where the threshold is based on reported UE capability [13, TS 38.306], for determining PDSCH antenna port quasi co-location, the UE assumes that the TCI state or the QCL assumption for the PDSCH is identical to the TCI state or QCL assumption whichever is applied for the CORESET used for the PDCCH transmission within the active BWP of the serving cell.

When a UE is configured with both sfnSchemePDCCH and sfnSchemePDSCH scheduled by DCI format 1_0 or by DCI format 1_1/1_2, if the time offset between the reception of the DL DCI and the corresponding PDSCH of a serving cell is equal to or greater than a threshold timeDurationForQCL if applicable:

    - if the UE supports sfn-DefaultDL-BeamSetup-r17 for DCI scheduling without TCI field, the UE assumes that the TCI state(s) or the QCL assumption(s) for the PDSCH is identical to the TCI state(s) or QCL assumption(s) whichever is applied for the CORESET used for the reception of the DL DCI within the active BWP of the serving cell regardless of the number of active TCI states of the CORESET. If the UE does not support sfn-SchemeA-DynamicSwitching-r17 or sfn-SchemeB-DynamicSwitching-r17, the UE should be activated with the CORESET with two TCI states.

    - else if the UE does not support sfn-DefaultDL-BeamSetup-r17 for DCI scheduling without TCI field, the UE shall expect TCI field present when scheduled by DCI format 1_1/1_2.

When a UE is configured with sfnSchemePDSCH and sfnSchemePDCCH is not configured, when scheduled by DCI format 1_1/1_2, if the time offset between the reception of the DL DCI and the corresponding PDSCH of a serving cell is equal to or greater than a threshold timeDurationForQCL if applicable, the UE shall expect TCI field present.

For PDSCH scheduled by DCI format 1_0, 1_1, 1_2, when a UE is configured with *sfnSchemePDCCH* set to 'sfnSchemeA' and *sfnSchemePDSCH* is not configured, and there is no TCI codepoint with two TCI states in the activation command, and if the time offset between the reception of the DL DCI and the corresponding PDSCH is equal or larger than the threshold *timeDurationForQCL* if applicable and the CORESET which schedules the PDSCH is indicated with two TCI states, the UE assumes that the TCI state or the QCL assumption for the PDSCH is identical to the first TCI state or QCL assumption which is applied for the CORESET used for the PDCCH transmission within the active BWP of the serving cell. If a PDSCH is scheduled by a DCI format having the TCI field present, the TCI field in DCI in the scheduling component carrier points to the activated TCI states in the scheduled component carrier or DL BWP, the UE shall use the *TCI-State* according to the value of the *'Transmission Configuration Indication'* field in the detected PDCCH with DCI for determining PDSCH antenna port quasi co-location. The UE may assume that the DM-RS ports of PDSCH of a serving cell are quasi co-located with the RS(s) in the TCI state with respect to the QCL type parameter(s) given by the indicated TCI state if the time offset between the reception of the DL DCI and the corresponding PDSCH is equal to or greater than a threshold *timeDurationForQCL,* where the threshold is based on reported UE capability [13, TS 38.306]. For a single slot PDSCH, the indicated TCI state(s) should be based on the activated TCI states in the slot with the scheduled PDSCH. For a multi-slot PDSCH or the UE is configured with higher layer parameter *pdsch-TimeDomainAllocationListForMultiPDSCH,* the indicated TCI state(s) should be based on the activated TCI states in the first slot with the scheduled PDSCH(s), and UE shall expect the activated TCI states are the same across the slots with the scheduled PDSCH(s). When the UE is configured with CORESET associated with a search space set for cross-carrier scheduling and the UE is not configured with *enableDefaultBeamForCCS,* the UE expects *tci-PresentInDCI* is set as 'enabled' or *tci-PresentDCI-1-2* is configured for the CORESET, and if one or more of the TCI states configured for the serving cell scheduled by the search space set contains *qcl-Type* set to 'typeD', the UE expects the time offset between the reception of the detected PDCCH in the search space set and a corresponding PDSCH is larger than or equal to the threshold *timeDurationForQCL.*

Independent of the configuration of *tci-PresentInDCI* and *tci-PresentDCI-1-2* in RRC connected mode, if the UE is not provided *dl-OrJointTCI-StateList-r17,* and if the offset between the reception of the DL DCI and the corresponding PDSCH is less than the threshold *timeDurationForQCL* and at least one configured TCI state for the serving cell of scheduled PDSCH contains *qcl-Type* set to 'typeD',

- the UE may assume that the DM-RS ports of PDSCH(s) of a serving cell are quasi co-located with the RS(s) with respect to the QCL parameter(s) used for PDCCH quasi co-location indication of the CORESET associated with a monitored search space with the lowest *controlResourceSetId* in the latest slot in which one or more CORESETs within the active BWP of the serving cell are monitored by the UE. In this case, if the *qcl-Type* is set to 'typeD' of the PDSCH DM-RS is different from that of the PDCCH DM-RS with which they overlap in at least one symbol, the UE is expected to prioritize the reception of PDCCH associated with that CORESET. This also applies to the intra-band CA case (when PDSCH and the CORESET are in different component carriers).

- If a UE is configured with *enableDefaultTCI-StatePerCoresetPoolIndex* and the UE is configured by higher layer parameter *PDCCH-Config* that contains two different values of *coresetPoolIndex* in different *ControlResourceSets,*

- the UE may assume that the DM-RS ports of PDSCH associated with a value of *coresetPoolIndex* of a serving cell are quasi co-located with the RS(s) with respect to the QCL parameter(s) used for PDCCH quasi co-location indication of the CORESET associated with a monitored search space with the lowest *controlResourceSetId* among CORESETs, which are configured with the same value of *coresetPoolIndex* as the PDCCH scheduling that PDSCH, in the latest slot in which one or more CORESETs associated with the same value of *coresetPoolIndex* as the PDCCH scheduling that PDSCH within the active BWP of the serving cell are monitored by the UE. In this case, if the 'QCL-TypeD' of the PDSCH DM-RS is different from that of the PDCCH DM-RS with which they overlap in at least one symbol and they are associated with same value of *coresetPoolIndex,* the UE is expected to prioritize the reception of PDCCH associated with that CORESET. This also applies to the intra-band CA case (when PDSCH and the CORESET are in different component carriers).

EP 4 734 642 A1

- If a UE is configured with *enableTwoDefaultTCI-States,* and at least one TCI codepoint indicates two TCI states, the UE may assume that the DM-RS ports of PDSCH or PDSCH transmission occasions of a serving cell are quasi co-located with the RS(s) with respect to the QCL parameter(s) associated with the TCI states corresponding to the lowest codepoint among the TCI codepoints containing two different TCI states. When the UE is configured by higher layer parameter *repetitionScheme* set to 'tdmSchemeA' or is configured with higher layer parameter *repetitionNumber,* and the offset between the reception of the DL DCI and the first PDSCH transmission occasion is less than the threshold *timeDurationForQCL,* the mapping of the TCI states to PDSCH transmission occasions is determined according to clause 5.1.2.1 by replacing the indicated TCI states with the TCI states corresponding to the lowest codepoint among the TCI codepoints containing two different TCI states based on the activated TCI states in the slot with the first PDSCH transmission occasion. In this case, if the 'QCL-TypeD' in both of the TCI states corresponding to the lowest codepoint among the TCI codepoints containing two different TCI states is different from that of the PDCCH DM-RS with which they overlap in at least one symbol, the UE is expected to prioritize the reception of PDCCH associated with that CORESET. This also applies to the intra-band CA case (when PDSCH and the CORESET are in different component carriers)

- If a UE is not configured with *sfnSchemePDSCH,* and the UE is configured with *sfnSchemePDCCH* set to 'sfnSchemeA' and there is no TCI codepoint with two TCI states in the activation command and the CORESET with the lowest ID in the latest slot is indicated with two TCI states, the UE may assume that the DM-RS ports of PDSCH of a serving cell are quasi co-located with the RS(s) with respect to the QCL parameter(s) associated with the first TCI state of two TCI states indicated for the CORESET. In this case, if the *qcl-Type* is set to 'typeD' of the PDSCH DM-RS is different from that of the PDCCH DM-RS with which they overlap in at least one symbol, the UE is expected to prioritize the reception of PDCCH associated with that CORESET with single active TCI state. This also applies to the intra-band CA case (when PDSCH and the CORESET are in different component carriers).

- In all cases above, if none of configured TCI states for the serving cell of scheduled PDSCH is configured with *qcl-Type* set to 'typeD', the UE shall obtain the other QCL assumptions from the indicated TCI state(s) for its scheduled PDSCH irrespective of the time offset between the reception of the DL DCI and the corresponding PDSCH.

Independent of the configuration of *tci-PresentInDCI* and *tci-PresentDCI-1-2* in RRC connected mode, if the UE is provided *dl-OrJointTCI-StateList-r17,* and if the offset between the reception of the DL DCI and the corresponding PDSCH is less than the threshold *timeDurationForQCL* and at least one configured TCI state for the serving cell of scheduled PDSCH contains *qcl-Type* set to 'typeD', regardless of configuration of *followUnifiedTCI-State,*

- if the indicated TCI state is associated with the PCI of the serving cell, the indicated TCI state is applied to PDSCH reception.

- if the indicated TCI state is associated with a PCI different from the serving cell, the UE may assume that the DM-RS ports of PDSCH(s) of a serving cell are quasi co-located with the RS(s) with respect to the QCL parameter(s) used for PDCCH quasi co-location indication of the CORESET associated with a monitored search space with the lowest *controlResourceSetId* in the latest slot in which one or more CORESETs within the active BWP of the serving cell are monitored by the UE. In the CA case, if the 'QCL-TypeD' of the PDSCH DM-RSs from respective CCs in a band are different in a slot, the QCL-TypeD assumption of the PDSCH DM-RS in the CC with lowest CC ID in the band is applied to all the PDSCH DM-RSs in the CCs in the band. In this case, if the *qcl-Type* is set to 'typeD' of the PDSCH DM-RS is different from that of the PDCCH DM-RS with which they overlap in at least one symbol, the UE is expected to prioritize the reception of PDCCH associated with that CORESET. This also applies to the intra-band CA case (when PDSCH and the CORESET are in different component carriers).

If the PDCCH carrying the scheduling DCI is received on one component carrier, and a PDSCH scheduled by that DCI is on another component carrier:

- The *timeDurationForQCL* is determined based on the subcarrier spacing of the scheduled PDSCH. If $\mu_{PDCCH} < \mu_{PDSCH}$ an additional timing delay $d\,\dfrac{2^{\mu_{PDSCH}}}{2^{\mu_{PDCCH}}}$ is added to the *timeDurationForQCL,* where $d$ is defined in 5.2.1.5.1a-1, otherwise $d$ is zero;

- When the UE is configured with *enableDefaultBeamForCCS,* if the offset between the reception of the DL DCI and the corresponding PDSCH is less than the threshold *timeDurationForQCL,* or if the DL DCI does not have the TCI field present, the UE obtains its QCL assumption for the scheduled PDSCH from the activated TCI state with the lowest ID applicable to PDSCH in the active BWP of the scheduled cell.

A UE that has indicated a capability *beamCorrespondenceWithoutUL-BeamSweeping* set to 'supported', as described in [13, TS 38.306], can determine a spatial domain filter to be used while performing the applicable channel access procedures described in [16, TS 37.213] prior to a UL transmission on the channel as follows:

- if UE is indicated with an SRI corresponding to the UL transmission, the UE may use a spatial domain filter that is same as the spatial domain transmission filter associated with the indicated SRI,

- if UE is configured with *SRS-spatialRelationInfo* for the UL transmission, the UE may use a spatial domain filter that is same as the spatial domain filter associated with *referenceSignal* in the corresponding *SRS-spatialRelationInfo,*

- if UE is configured with *TCI-State* in *dl-OrJointTCI-StateList* or *TCI-UL-State* in *ul-TCI-StateList,* the UE may use a spatial domain filter that is same as the spatial domain receive filter the UE may use to receive the DL reference signal associated with the indicated TCI state.

When the PDCCH reception includes two PDCCH from two respective search space sets, as described in clause 10.1 of [6, TS 38.213], for the purpose of determining the time offset between the reception of the DL DCI and the corresponding PDSCH, the PDCCH candidate that ends later in time is used. When the PDCCH reception includes two PDCCH candidates from two respective search space sets, as described in clause 10.1 of [6, TS 38.213], for the configuration of *tci-PresentInDCI* or *tci-PresentDCI-1-2,* the UE expects the same configuration in the first and second CORESETs associated with the two PDCCH candidates; and if the PDSCH is scheduled by a DCI format not having the TCI field present and if the scheduling offset is equal to or larger than *timeDurationForQCL,* if applicable, PDSCH QCL assumption is based on the CORESET with lower ID among the first and second CORESETs associated with the two PDCCH candidates. For a periodic CSI-RS resource in an *NZP-CSI-RS-ResourceSet* configured with higher layer parameter *trs-Info,* the UE shall expect that a TCI-State indicates one of the following quasi co-location type(s):

- 'typeC' with an SS/PBCH block and, when applicable, 'typeD' with the same SS/PBCH block where SS/PBCH block may have a PCI different from the PCI of the serving cell. The UE can assume center frequency, SCS, SFN offset are the same for SS/PBCH block from the serving cell and SS/PBCH block having a PCI different from the serving cell, or

- 'typeC' with an SS/PBCH block and, when applicable,'typeD' with a CSI-RS resource in an *NZP-CSI-RS-ResourceSet* configured with higher layer parameter *repetition,* where SS/PBCH block may have a PCI different from the PCI of the serving cell. The UE can assume center frequency, SCS, SFN offset are the same for SS/PBCH block from the serving cell and SS/PBCH block having a PCI different from the serving cell.

For periodic/semi-persistent CSI-RS, if the UE is configured with *dl-OrJointTCI-StateList,* the UE can assume that the indicated *TCI-State* is not applied. For an aperiodic CSI-RS resource in an *NZP-CSI-RS-ResourceSet* configured with higher layer parameter *trs-Info,* the UE shall expect that a *TCI-State* indicates *qcl-Type* set to 'typeA' with a periodic CSI-RS resource in a *NZP-CSI-RS-ResourceSet* configured with higher layer parameter *trs-Info* and, when applicable, *qcl-Type* set to 'typeD' with the same periodic CSI-RS resource.

For a CSI-RS resource in an *NZP-CSI-RS-ResourceSet* configured without higher layer parameter *trs-Info* and without the higher layer parameter *repetition,* the UE shall expect that a TCI-State indicates one of the following quasi co-location type(s):

- 'typeA' with a CSI-RS resource in a *NZP-CSI-RS-ResourceSet* configured with higher layer parameter *trs-Info* and, when applicable, 'typeD' with the same CSI-RS resource, or

- 'typeA' with a CSI-RS resource in a *NZP-CSI-RS-ResourceSet* configured with higher layer parameter *trs-Info* and, when applicable, 'typeD' with an SS/PBCH block, where SS/PBCH block may have a PCI different from the PCI of the serving cell. The UE can assume center frequency, SCS, SFN offset are the same for SS/PBCH block from the serving cell and SS/PBCH block having a PCI different from the serving cell, or

- 'typeA' with a CSI-RS resource in a *NZP-CSI-RS-ResourceSet* configured with higher layer parameter *trs-Info* and, when applicable, 'typeD' with a CSI-RS resource in a *NZP-CSI-RS-ResourceSet* configured with higher layer parameter *repetition,* or

- 'typeB' with a CSI-RS resource in a *NZP-CSI-RS-ResourceSet* configured with higher layer parameter *trs-Info* when 'typeD' is not applicable.

For a CSI-RS resource in an *NZP-CSI-RS-ResourceSet* configured with higher layer parameter *repetition,* the UE shall expect that a TCI-State indicates one of the following quasi co-location type(s):

- 'typeA' with a CSI-RS resource in a *NZP-CSI-RS-ResourceSet* configured with higher layer parameter *trs-Info* and, when applicable, 'typeD' with the same CSI-RS resource, or

- 'typeA' with a CSI-RS resource in a *NZP-CSI-RS-ResourceSet* configured with higher layer parameter *trs-Info* and, when applicable, 'typeD' with a CSI-RS resource in a *NZP-CSI-RS-ResourceSet* configured with higher layer parameter *repetition,* or

- 'typeC' with an SS/PBCH block and, when applicable, 'typeD' with the same SS/PBCH block, the reference RS may additionally be an SS/PBCH block having a PCI different from the PCI of the serving cell. The UE can assume center frequency, SCS, SFN offset are the same for SS/PBCH block from the serving cell and SS/PBCH block having a PCI different from the serving cell.

For the DM-RS of PDCCH, if the UE is not configured with *dl-OrJointTCI-StateList,* the UE shall expect that a *TCI-State* indicates one of the following quasi co-location type(s):

- 'typeA' with a CSI-RS resource in a *NZP-CSI-RS-ResourceSet* configured with higher layer parameter *trs-Info* and, when applicable, 'typeD' with the same CSI-RS resource, or

- 'typeA' with a CSI-RS resource in a *NZP-CSI-RS-ResourceSet* configured with higher layer parameter *trs-Info* and, when applicable, 'typeD' with a CSI-RS resource in an *NZP-CSI-RS-ResourceSet* configured with higher layer parameter *repetition,* or

- 'typeA' with a CSI-RS resource in a *NZP-CSI-RS-ResourceSet* configured without higher layer parameter trs-Info and without higher layer parameter *repetition* and, when applicable, 'typeD' with the same CSI-RS resource.

When a UE is configured with *sfnSchemePdcch* set to 'sfnSchemeA', and CORESET is activated with two TCI states, the UE shall assume that the DM-RS port(s)of the PDCCH in the CORESET is quasi co-located with the DL-RSs of the two TCI states. When a UE is configured with *sfnSchemePdcch* set to 'sfnSchemeB', and a CORESET is activated with two TCI states, the UE shall assume that the DM-RS port(s)of the PDCCH is quasi co-located with the DL-RSs of the two TCI states except for quasi co-location parameters {Doppler shift, Doppler spread} of the second indicated TCI state.

When a UE is configured by higher layer parameter *cjtSchemePDSCH* and *dl-OrJointTCI-StateList* and is indicated with two TCI-States applied for PDSCH reception and reports [support for two joint TCI states for PDSCH-CJT]:

- if the UE is configured with *cjtSchemeA,* the UE assumes that PDSCH DM-RS port(s) are QCLed with the DL RSs of both indicated TCI-States with respect to QCL-TypeA.

- if the UE is configured with *cjtSchemeB,* the UE assumes that PDSCH DM-RS port(s) are QCLed with the DL RSs of both indicated TCI-States with respect to QCL-TypeA except for QCL parameters {Doppler shift, Doppler spread} of the second indicated joint TCI state.

For the DM-RS of PDSCH, if the UE is not configured with *dl-OrJointTCI-StateList,* the UE shall expect that a *TCI-State* indicates one of the following quasi co-location type(s):

- 'typeA' with a CSI-RS resource in a *NZP-CSI-RS-ResourceSet* configured with higher layer parameter *trs-Info* and, when applicable, 'typeD' with the same CSI-RS resource, or

- 'typeA' with a CSI-RS resource in a *NZP-CSI-RS-ResourceSet* configured with higher layer parameter *trs-Info* and, when applicable, 'typeD' with a CSI-RS resource in an *NZP-CSI-RS-ResourceSet* configured with higher layer parameter *repetition,*or

- typeA' with a CSI-RS resource in a *NZP-CSI-RS-ResourceSet* configured without higher layer parameter *trs-Info* and without higher layer parameter *repetition* and, when applicable, 'typeD' with the same CSI-RS resource.

For the DM-RS of PDCCH, if the UE is configured with *dl-OrJointTCI-StateList,* the UE shall expect that an indicated *TCI-State* indicates one of the following quasi co-location type(s):

- 'typeA' with a CSI-RS resource in a *NZP-CSI-RS-ResourceSet* configured with higher layer parameter *trs-Info* and, when applicable, 'typeD' with the same CSI-RS resource, or

- 'typeA' with a CSI-RS resource in a *NZP-CSI-RS-ResourceSet* configured with higher layer parameter *trs-Info* and, when applicable, 'typeD' with a CSI-RS resource in an *NZP-CSI-RS-ResourceSet* configured with higher layer parameter *repetition.*

For the DM-RS of PDSCH, if the UE is configured with *dl-OrJointTCI-StateList,* the UE shall expect that an indicated *TCI-State* indicates one of the following quasi co-location type(s):

- 'typeA' with a CSI-RS resource in a *NZP-CSI-RS-ResourceSet* configured with higher layer parameter *trs-Info* and, when applicable, 'typeD' with the same CSI-RS resource, or

- 'typeA' with a CSI-RS resource in a *NZP-CSI-RS-ResourceSet* configured with higher layer parameter *trs-Info* and, when applicable, 'typeD' with a CSI-RS resource in an *NZP-CSI-RS-ResourceSet* configured with higher layer parameter *repetition.*

When a UE is configured with *sfnSchemePDSCH* set to 'sfnSchemeA', and the UE is indicated with two TCI states in a codepoint of the DCI field 'Transmission Configuration Indication' in a DCI scheduling a PDSCH, the UE shall assume that the DM-RS port(s)of the PDSCH is quasi co-located with the DL-RSs of the two TCI states.

When a UE is configured with *sfnSchemePDSCH* set to 'sfnSchemeB', and the UE is indicated with two TCI states in a codepoint of the DCI field 'Transmission Configuration Indication' in a DCI scheduling a PDSCH, the UE shall assume that the DM-RS port(s)of the PDSCH is quasi co-located with the DL-RSs of the two TCI states except for quasi co-location parameters {Doppler shift, Doppler spread} of the second indicated TCI state.

When a UE is configured with *dl-OrJointTCI-StateList* or *TCI-UL-State* and is configured by higher layer parameter *PDCCH-Config* that contains two different values of coresetPoolIndex in *ControlResourceSet,* an indicated TCI state is specific to a coresetPoolIndex value, when it is indicated by the DCI field 'Transmission Configuration Indication' in DCI format 1_1/1_2 associated with the coresetPoolIndex value.

When a UE is configured with *dl-OrJointTCI-StateList* and is having two indicated TCI-states, if the UE does not report its capability of *[two default beams for S-DCI based MTRP]* in frequency range 2 and when the offset between the reception of the scheduling/activation DCI format 1_0/1_1/1_2 and the scheduled or activated PDSCH reception is less than *[timeDurationForQCL]* in frequency range 2, the UE shall apply the first indicated TCI-State to the scheduled or activated PDSCH reception.

When a UE is configured with *dl-OrJointTCI-StateList,* is configured by higher layer parameter *PDCCH-Config* that contains two different values of *coresetPoolIndex* in *ControlResourceSet,* if the UE does not report its capability of [default beam per *coresetPoolIndex* for M-DCI based MTRP] in frequency range 2

- when the offset between the reception of the scheduling/activation DCI format 1_0/1_1/1_2 in a CORESET associated with *coresetPoolIndex* value 0 and the scheduled or activated PDSCH reception is less than *[timeDurationForQCL]* in frequency range 2, the UE shall apply the indicated joint/DL TCI state specific to *coresetPoolIndex* value 0 to the scheduled or activated PDSCH reception.

- the UE does not expect that the offset between reception of the scheduling/activation DCI format 1_0/1_1/1_2 in a CORESET associated with *coresetPoolIndex* value 1 and scheduled or activated PDSCH reception is less than [timeDurationForQCL] in frequency range 2.

When a UE is configured with *dl-OrJointTCI-StateList* and is having two indicated TCI-states:

- Regardless of the offset between the reception of the scheduling DCI format 1_0/1_1/1_2 and the scheduled/activated PDSCH reception, if the UE is in frequency range 1, or the UE reports its capability of *[two default beams for S-DCI based MTRP]* in frequency range 2, or

- If the UE does not report its capability of *[two default beams for S-DCI based MTRP]* in frequency range 2 and if the scheduling offset between the reception of the scheduling DCI format 1_0/1_1/1_2 and the scheduled/activated PDSCH reception is equal to or larger than *[timeDurationForQCL]*

- The UE can be configured by higher layer parameter *applyIndicatedTCIState* to indicate whether the first, the second, or both of the indicated TCI-state(s) is/are applied to PDSCH reception scheduled or activated by DCI format 1_0. The UE can be configured with *applyIndicatedTCIState* with value *both* only when the UE is configured with *cjtSchemePDSCH* and the UE reports [*support for two joint TCI states for PDSCH-CJT*] or the UE is configured with *sfnSchemePdsch*. In that case, the UE shall apply both indicated TCI-states to PDSCH reception scheduled or activated by DCI format 1_0 on a search space other than Type0/0A/2 CSS on CORESET#0.

- If the UE is not configured with *applyIndicatedTCIState,* the first indicated TCI-state is applied to PDSCH reception scheduled or activated by DCI format 1_0.

- When the UE is configured with *tciSelection-PresentInDCI* jointly for both DCI formats 1_1 and 1_2 in the same DL BWP, and when the UE receives a DCI format 1_1/1_2 that schedules or activates PDSCH reception, the UE shall determine the indicated joint/DL TCI state(s) for the PDSCH reception according to the following:

- If the DCI format 1_1/1_2 indicates codepoint "00" for the [TCI selection field], the UE shall apply the first one of two indicated joint/DL TCI states to all PDSCH DM-RS port(s) of corresponding PDSCH transmission occasion(s) scheduled or activated by the DCI format 1_1/1_2.

- If the DCI format 1_1/1_2 indicates codepoint "01" for the [TCI selection field], the UE shall apply the second one of two indicated joint/DL TCI states to all PDSCH DM-RS port(s) of corresponding PDSCH transmission occasion(s) scheduled or activated by the DCI format 1_1/1_2.

- If the DCI format 1_1/1_2 indicates codepoint "10" for the [TCI selection field], the UE shall apply both indicated joint/DL TCI states to the PDSCH reception scheduled or activated by the DCI format 1_1/1_2.

- If the UE is not configured with tciSelection-PresentInDCI and when the UE receives a DCI format 1_1/1_2 that schedules/activates PDSCH reception, the UE shall apply both indicated TCI-States to the scheduled or activated PDSCH reception.

As described above, a UE may be configured with a list of TCI-state configurations through higher layer parameters (e.g., PDSCH-Config). The UE may decode a PDSCH using the list of TCI-state configurations. Each TCI state may include a parameter for configuring a QCL relationship between one or two DL reference signals and a DM-RS port of a PDSCH, a DM-RS port of a PDCCH, or a CSI-RS port of a CSI-RS resource. QCL may be configured for a first DL RS using a higher layer parameter qcl-Type1 and may be configured using qcl-Type2 for a second DL RS. The QCL type of each of the two DL RSs may be differently configured irrespective of whether the DL RSs have the same reference or different references. A QCL type corresponding to each DL RS may be configured by a higher layer parameter (e.g., qcl-Type in QCL-Info). The QCL type may have one of the following values.

- typeA: {Doppler shift, Doppler spread, average delay, delay spread}

- typeB: {Doppler shift, Doppler spread}

- typeC: {Doppler shift, average delay}

- typeD: {Spatial Rx parameter}

Here, Spatial RX parameter may refer to any one of various parameters including an angle of arrival (AoA), a power angular spectrum (PAS) of AoA, an angle of departure (AoD), a PAS of AoD, a transmit/receive channel correlation, transmit/receive beamforming, and a spatial channel correlation.

A base station may transmit configuration information to a terminal via higher layer signaling regarding whether to apply information of a TCI field included in DCI.

In addition, the terminal may receive information on TCI states or pairs of TCI states. As an example, the base station may deliver a plurality of TCI states to the terminal through RRC signaling, and a portion of the TCI states may be configured as TCI states for CORESET. The terminal may receive an activation command. The activation command may be used to map a TCI state (or TCI states) and/or a pair (or pairs) of TCI states to a code point of DCI field 'transmission configuration indication'.

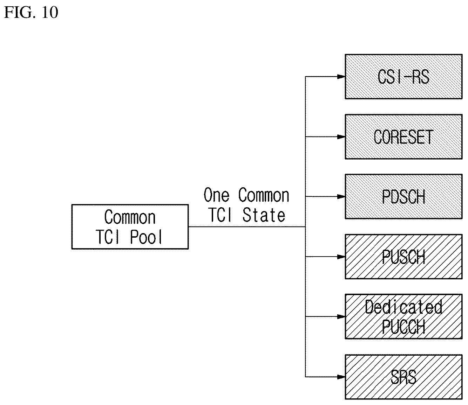

In addition, as shown in FIG. 10 below, a unified beam may be configured for a plurality of channels or reference signals through a unified TCI state.

The base station may deliver beam configuration information regarding a CSI-RS, a CORESET, a PDSCH, a PUSCH, a PUCCH, and an SRS to the terminal through the unified TCI state, without needing to deliver a TCI state for each channel individually. Whether to activate the unified TCI state may be implicitly delivered to the terminal. As an example, when TCI-State or TCI-UL-State configuration is not present for the BWP of a CC, the terminal may apply the TCI-State or TCI-UL-State configuration from the reference BWP of a reference CC configured by the unified TCI-StateRef.

A multiple transmission and reception point (M-TRP) technique, in which communication is performed through a plurality of transmission and reception nodes, may be provided. The M-TRP technique may be categorized into a single downlink control information (S-DCI) technique, in which transmission and reception via multiple nodes are controlled through single control information, and a multiple downlink control information (M-DCI) technique, in which information for each node is delivered separately. Additionally, the procedure for delivering TCI information may vary depending on whether the TCI information for uplink and downlink is configured separately or jointly.

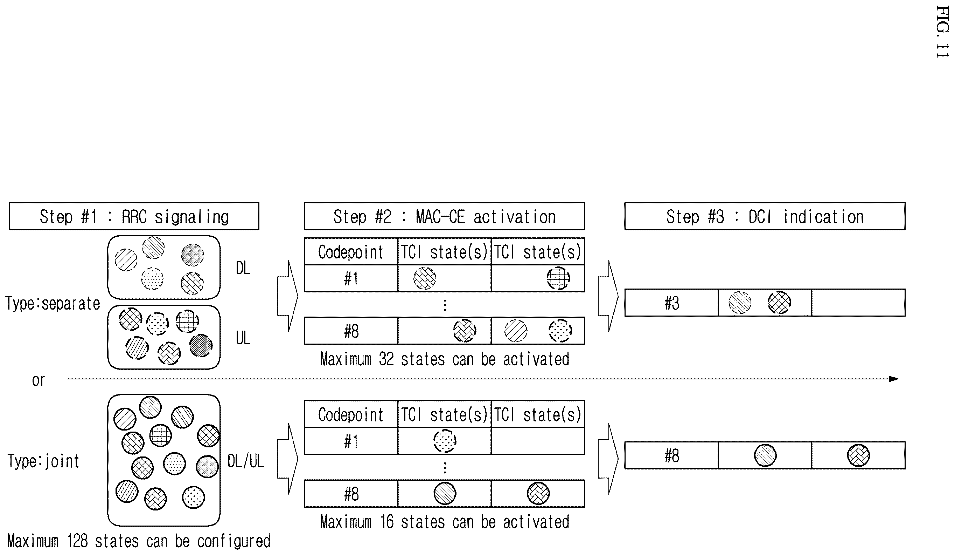

FIG. 11 illustrates an example of a procedure of configuring each layer for delivering a TCI state in an M-TRP structure according to an embodiment of the present disclosure.

First, configuration types related to a TCI are classified into a separate type and a joint type. The separate type is a scheme in which a TCI state is configured through a separate list of TCI states for uplink and downlink, and the joint type is a scheme in which a TCI state is configured through a joint list of TCI states for uplink and downlink. A base station may deliver a configuration type related to a unified TCI to a terminal through unifiedTCI-StateType in ServingCellConfig. In addition, the base station may deliver information on a set of resources related to a reference signal to the terminal through PDSCH-Config, and the PDSCH-Config may be included in a BWP-Downlink IE.

In addition, the terminal may be configured with a list of up to 128 TCI state configurations through a higher layer parameter (e.g., dl-OrJointTCI-StateList in PDSCH-Config). A TCI configuration list may be used to provide a criterion for determining a ULTX space filter for dynamic-grant and configuration-grant-based PUSCH and PUCCH resources and an SRS in a BWP/CC.

Activated TCI state configurations among the TCI state configurations may be delivered through a TCI state activation/inactivation MAC CE. A unified TCI state activation/inactivation MAC CE may be defined as follows.

| 6.1.3.47 Unified TCI States Activation/Deactivation MAC CE |
| --- |

(continued)

The Unified TCI States Activation/Deactivation MAC CE is identified by a MAC subheader with eLCID as specified in Table 6.2.1-1b. It has a variable size consisting of following fields:

- CORESET Pool ID: This field indicates that the mapping between the activated TCI states and the codepoint of the DCI *Transmission Configuration Indication* set by field TCI state ID is specific to the *ControlResourceSetId* configured with CORESET Pool ID as specified in TS 38.331 [5]. This field set to 1 indicates that the TCI states are specified to CORESET pool ID equal to 1, otherwise the TCI states are specified to CORESET pool ID equal to 0. If the *coresetPoolIndex* is not configured for any CORESET or only one *coresetPoolIndex* is configured for any CORESET, the R bit is present instead;

- Serving Cell ID: This field indicates the identity of the Serving Cell for which the MAC CE applies. The length of the field is 5 bits. If the indicated Serving Cell is configured as part of a *simultaneousU-TCI-UpdateList1, simultaneousU-TCI-UpdateList2, simultaneousU-TCI-UpdateList3* or *simultaneousU-TCI-UpdateList4* as specified in TS 38.331 [5], this MAC CE applies to all theServing Cells in the set *simultaneousU-TCI-UpdateList1, simultaneousU-TCI-UpdateList2, simultaneousU-TCI-UpdateList3* or *simultaneousU-TCI-UpdateList4,* respectively;

- DL BWP ID: This field indicates a DL BWP for which the MAC CE applies as the codepoint of the DCI *bandwidth part indicator* field as specified in TS 38.212 [9]. The length of the BWP ID field is 2 bits;

- UL BWP ID: This field indicates a UL BWP for which the MAC CE applies as the codepoint of the DCI *bandwidth part indicator* field as specified in TS 38.212 [9]. If value of *unifiedTCI-StateType* in the Serving Cell indicated by Serving Cell ID is *joint,* this field is considered as the reserved bits. The length of the BWP ID field is 2 bits;

- $P_i$: This field indicates whether each TCI codepoint has multiple TCI states or single TCI state. If $P_i$ field is set to 1, it indicates that $i^{th}$ TCI codepoint includes the DL TCI state and the UL TCI state. If $P_i$ field is set to 0, it indicates that $i^{th}$ TCI codepoint includes only the DL/joint TCI state or the UL TCI state. The codepoint to which a TCI state is mapped is determined by its ordinal position among all the TCI state ID fields;

- D/U: This field indicate whether the TCI state ID in the same octet is for joint/downlink or uplink TCI state. If this field is set to 1, the TCI state ID in the same octet is for joint/downlink. If this field is set to 0, the TCI state ID in the same octet is for uplink;

- TCI state ID: This field indicates the TCI state identified by *TCI-StateId* as specified in TS 38.331 [5]. If D/U is set to 1, 7-bits length TCI state ID i.e. *TCI-StateId* as specified in TS 38.331 [5] is used. If D/U is set to 0, the most significant bit of TCI state ID is considered as the reserved bit and remainder 6 bits indicate the *TCI-UL-State-Id* as specified in TS 38.331 [5]. The maximum number of activated TCI states is 16;

- R: Reserved bit, set to 0.

| CORE SET Pool ID | Serving Cell ID | | | | | DL BWP ID | | Oct 1 |
|---|---|---|---|---|---|---|---|---|
| R | R | R | R | R | R | UL BWP ID | | Oct 2 |
| $P_1$ | $P_2$ | $P_3$ | $P_4$ | $P_5$ | $P_6$ | $P_7$ | $P_8$ | Oct 3 |
| D/U | TCI state ID 1 | | | | | | | Oct 4 |
| D/U | TCI state ID 2 | | | | | | | Oct 5 |
| | ... | | | | | | | |
| D/U | TCI state ID N | | | | | | | Oct N+3 |

Figure 6.1.3.47-1: Unified TCI state activation/deactivation MAC CE

The unified TCI state activation/inactivation MAC CE may indicate a TCI state ID to be activated. The unified TCI state activation/inactivation MAC CE includes a serving cell ID, a DL BWP ID, and a UL BWP ID. A codepoint may be used to indicate a serving cell and a BWP to which the MAC CE may be applied. A Pi field may indicate whether each i-th codepoint includes a plurality of TCI states or a single TCI state. When Pi = 1, the i-th TCI codepoint includes a plurality of TCI states, and when Pi = 0, the i-th TCI codepoint may include only a DL/joint TCI state or a UL TCI state.

A D/U field may indicate whether a TCI state corresponding to a TCI state ID in the same octet is a DL/joint TCI state or a UL TCI state. Accordingly, in FIG. 11, the D/U field belonging to the same octet as a separate-type DL TCI state or a joint-type TCI state may be set to 1, and the D/U field belonging to the same octet as a separate-type UL TCI state may be set to 0.

An enhanced unified TCI state activation/inactivation MAC CE for joint TCI states may be defined as follows.

---

6.1.3.70       Enhanced Unified TCI States Activation/Deactivation MAC CE for Joint TCI States

The Enhanced Unified TCI States Activation/Deactivation MAC CE for Joint TCI States is identified by a MAC subheader with eLCID as specified in Table 6.2.1-1b. It has a variable size consisting of following fields:

- Serving Cell ID: This field indicates the identity of the Serving Cell for which the MAC CE applies. The length of the field is 5 bits. If the indicated Serving Cell is configured as part of a *simultaneousU-TCI-UpdateList1*, *simultaneousU-TCI-UpdateList2*, *simultaneousU-TCI-UpdateList3* or *simultaneousU-TCI-UpdateList4* as specified in TS 38.331 [5], this MAC CE applies to all theServing Cells in the set *simultaneousU-TCI-UpdateList1*, *simultaneousU-TCI-UpdateList2*, *simultaneousU-TCI-UpdateList3* or *simultaneousU-TCI-UpdateList4*, respectively;

- DL BWP ID: This field indicates a DL BWP for which the MAC CE applies as the codepoint of the DCI *bandwidth part indicator* field as specified in TS 38.212 [9]. The length of the BWP ID field is 2 bits;

- $F_{i,j}$: This field indicates for the TCI state ID fields associated with the codepoint i of the DCI *Transmission Configuration Indication* field whether the j-th joint TCI state is present or not, where j=1, 2. If $F_{i,j}$ field is set to 1, it indicates the j-th joint TCI state for codepoint i is present. If $F_{i,j}$ field is set to 0, it indicates the j-th joint TCI state for codepoint i is absent. The codepoint to which a TCI state is mapped is determined by its ordinal position among all the TCI state ID fields;

---

- TCI state ID: This field indicates the 7-bits length TCI state ID identified by *TCI-StateId* as specified in TS 38.331 [5]. The maximum number of activated TCI states is 16;

- R: Reserved bit, set to 0.

| R | Serving Cell ID | | | | | DL BWP ID | | Oct 1 |
|---|---|---|---|---|---|---|---|---|
| $F_{1,1}$ | $F_{1,2}$ | $F_{2,1}$ | $F_{2,2}$ | $F_{3,1}$ | $F_{3,2}$ | $F_{4,1}$ | $F_{4,2}$ | Oct 2 |
| $F_{5,1}$ | $F_{5,2}$ | $F_{6,1}$ | $F_{6,2}$ | $F_{7,1}$ | $F_{7,2}$ | $F_{8,1}$ | $F_{8,2}$ | Oct 3 |
| R | TCI state ID 1 | | | | | | | Oct 4 |
| R | TCI state ID 2 | | | | | | | Oct 5 |

...

| R | TCI state ID N | | | | | | | Oct N+3 |

Figure 6.1.3.70-1: Enhanced TCI state activation/deactivation MAC CE for Joint TCI States

Unlike the unified TCI state activation/inactivation MAC CE, the enhanced unified TCI state activation/inactivation MAC CE for joint TCI states may jointly manage TCI states of uplink and downlink, and thus the UL BWP ID may be omitted. A Fi,j field indicates whether the j-th joint TCI state exists in a TCI state ID field associated with codepoint i of the DCI Transmission Configuration Indication field. Here, j may be a value of 1 or 2. Accordingly, as shown in step #2 of FIG. 11, in the case of the joint type, up to two joint TCI states may correspond to each codepoint, and up to sixteen joint TCI states may be activated.

An enhanced unified TCI state activation/inactivation MAC CE for separate TCI states may be defined as follows.

6.1.3.71      Enhanced Unified TCI States Activation/Deactivation MAC CE for Separate TCI States

The Enhanced Unified TCI States Activation/Deactivation MAC CE CE for Separate TCI States is identified by a MAC subheader with eLCID as specified in Table 6.2.1-1b. It has a variable size consisting of following fields:
   - Serving Cell ID: This field indicates the identity of the Serving Cell for which the MAC CE applies. The length of the field is 5 bits. If the indicated Serving Cell is configured as part of a *simultaneousU-TCI-UpdateList1*, *simultaneousU-TCI-*

*UpdateList2, simultaneousU-TCI-UpdateList3* or *simultaneousU-TCI-UpdateList4* as specified in TS 38.331 [5], this MAC CE applies to all theServing Cells in the set *simultaneousU-TCI-UpdateList1*, *simultaneousU-TCI-UpdateList2*, *simultaneousU-TCI-UpdateList3* or *simultaneousU-TCI-UpdateList4*, respectively;

- DL BWP ID: This field indicates a DL BWP for which the MAC CE applies as the codepoint of the DCI *bandwidth part indicator* field as specified in TS 38.212 [9]. The length of the BWP ID field is 2 bits;

- UL BWP ID: This field indicates a UL BWP for which the MAC CE applies as the codepoint of the DCI *bandwidth part indicator* field as specified in TS 38.212 [9]. The length of the BWP ID field is 2 bits;

- $F_{i,j}$: This field indicates for the TCI state ID fields associated with the codepoint i of the DCI *Transmission Configuration Indication* field whether the j-th DL TCI state is present or not, where j=1, 2. If $F_{i,j}$ field is set to 1, it indicates the j-th DL TCI state for codepoint i is present. If $F_{i,j}$ field is set to 0, it indicates the j-th DL TCI state for codepoint i is absent;

- $S_{i,j}$: This field indicates for the TCI state ID fields associated with the codepoint i of the DCI *Transmission Configuration Indication* field whether the j-th UL TCI state is present or not, where j=1, 2. If $S_{i,j}$ field is set to 1, it indicates the j-th UL TCI state for codepoint i is present. If $S_{i,j}$ field is set to 0, it indicates the j-th UL TCI state for codepoint i is absent;

- TCI state ID: This field indicates the TCI state identified by *TCI-StateId* as specified in TS 38.331 [5]. If the indicated TCI state ID is DL TCI state, 7-bits length TCI state ID, i.e. *TCI-StateId*, as specified in TS 38.331 [5] is used. If the indicated TCI state ID is UL TCI state, the most significant bit of TCI state ID is considered as the reserved bit and remainder 6 bits indicate the *TCI-UL-State-Id* as specified in TS 38.331 [5]. TCI state IDs are in the order of indication of $F_{i,j}$ and $S_{i,j}$ fields. The maximum number of activated TCI states is 32;

- R: Reserved bit, set to 0.

| | | | | | | | | |
|---|---|---|---|---|---|---|---|---|
| R | Serving Cell ID | | | | | DL BWP ID | | Oct 1 |
| R | R | R | R | R | R | UL BWP ID | | Oct 2 |
| $F_{1,1}$ | $F_{1,2}$ | $S_{1,1}$ | $S_{1,2}$ | $F_{2,1}$ | $F_{2,2}$ | $S_{2,1}$ | $S_{2,2}$ | Oct 3 |
| $F_{3,1}$ | $F_{3,2}$ | $S_{3,1}$ | $S_{3,2}$ | $F_{4,1}$ | $F_{4,2}$ | $S_{4,1}$ | $S_{4,2}$ | Oct 4 |
| $F_{5,1}$ | $F_{5,2}$ | $S_{5,1}$ | $S_{5,2}$ | $F_{6,1}$ | $F_{6,2}$ | $S_{6,1}$ | $S_{6,2}$ | Oct 5 |
| $F_{7,1}$ | $F_{7,2}$ | $S_{7,1}$ | $S_{7,2}$ | $F_{8,1}$ | $F_{8,2}$ | $S_{8,1}$ | $S_{8,2}$ | Oct 6 |
| R | TCI state ID 1 | | | | | | | Oct 7 |
| R | TCI state ID 2 | | | | | | | Oct 8 |
| | ... | | | | | | | |
| R | TCI state ID N | | | | | | | Oct N+6 |

Figure 6.1.3.71-1: Enhanced TCI state activation/deactivation MAC CE for Separate TCI States

Unlike the unified TCI state activation/inactivation MAC CE, the enhanced unified TCI state activation/inactivation MAC CE for separate TCI states may include the Fi,j field and the Si,j field. The Fi,j field indicates whether the j-th DL TCI state exists in a TCI state ID field associated with codepoint i of the DCI Transmission Configuration Indication field. The Si,j field indicates whether the j-th UL TCI state exists in a TCI state ID field associated with codepoint i of the DCI Transmission Configuration Indication field. Accordingly, in the case of the separate type in step #2 of FIG. 11, up to two DL TCI states and up to two UL TCI states may correspond to each codepoint, so up to thirty-two TCI states may be activated.

A bast station may deliver DCI to a terminal through a PDCCH. The DCI may include the transmission configuration indication field, and decoding may be performed using a TCI state corresponding to codepoint i of the transmission configuration indication field included in the DCI. As described above, the correspondence between codepoint i and the TCI state may be indicated by a TCI state activation command.

The terminal may use a TCI state using the received DCI as follows.

For a CORESET other than a CORESET with index 0, if a UE is provided a single TCI state for a CORESET, or if the UE receives a MAC CE activation command for one or two of the provided TCI states for a CORESET, the UE assumes that the DM-RS antenna port associated with PDCCH receptions in the CORESET is quasi co-located with the one or more DL RS configured by the TCI states. For a CORESET with index 0, the UE expects that a CSI-RS configured with *qcl-Type* set to 'typeD' in a TCI state indicated by a MAC CE activation command for the CORESET is provided by a SS/PBCH block
    - if the UE receives a MAC CE activation command for one of the TCI states, the UE applies the activation command in the first slot that is after slot $k + 3N_{\text{slot}}^{\text{subframe},\mu} + 2^{\mu} \cdot k_{\text{mac}}$ where $k$ is the slot where the UE would transmit a PUCCH with HARQ-ACK information for the PDSCH providing the activation command, $\mu$ is the SCS configuration for the PUCCH in the slot when the activation command is applied, and $k_{\text{mac}}$ is a number of slots for SCS configuration $\mu = 0$ provided by *kmac* or $k_{\text{mac}} = 0$ if *kmac* is not provided.

(continued)

If a UE is provided *TCI-State* in *dl-OrJointTCI-StateList,* a DM-RS antenna port for PDCCH receptions in a CORESET, other than a CORESET with index 0, associated only with USS sets and/or Type3-PDCCH CSS sets, and a DM-RS antenna port for PDSCH receptions scheduled by DCI formats provided by PDCCH receptions in the CORESET are quasi co-located with reference signals provided by the indicated *TCI-State* [6, TS 38.214].

If a UE is provided *followUnifiedTCI-State* for a CORESET, other than a CORESET with index 0, associated at least with CSS sets other than Type3-PDCCH CSS sets, a DM-RS antenna port for PDCCH receptions in the CORESET and a DM-RS antenna port for PDSCH receptions scheduled by DCI formats provided by PDCCH receptions in the CORESET are quasi co-located with reference signals provided by the indicated *TCI-State.*

If a UE is provided *dl-OrJointTCI-StateList* and is indicated a first *TCI-State* and a second *TCI-State,* and is provided *apply-IndicatedTCIState* for a CORESET, other than a CORESET with index 0,

- if the CORESET is associated only with USS sets and/or Type3-PDCCH CSS sets

- if *apply-IndicatedTCIState* = 'first', the UE assumes that a DM-RS antenna port for PDCCH receptions in the CORESET is quasi co-located with the reference signals provided by the first *TCI-State*

- if *apply-IndicatedTCIState* = 'second', the UE assumes that a DM-RS antenna port for PDCCH receptions in the CORESET is quasi co-located with the reference signals provided by the second *TCI-State*

- if *apply-IndicatedTCIState* = 'both', the UE assumes that a DM-RS antenna port for PDCCH receptions in the CORESET is quasi co-located with the reference signals provided by the first *TCI-State* and the second *TCI-State*

- if the CORESET is associated at least with CSS sets other than Type3-PDCCH CSS sets,

- if *apply-IndicatedTCIState* = 'first', the UE assumes that a DM-RS antenna port for PDCCH receptions in the CORESET is quasi co-located with the reference signals provided by the first *TCI-State*

- if *apply-IndicatedTCIState* = 'second', the UE assumes that a DM-RS antenna port for PDCCH receptions in the CORESET is quasi co-located with the reference signals provided by the second *TCI-State*

- if *apply-IndicatedTCIState* = 'both', the UE assumes that a DM-RS antenna port for PDCCH receptions in the CORESET is quasi co-located with the reference signals provided by the first *TCI-State* and the second *TCI-State*

- if *apply-IndicatedTCIState* = 'none', the UE assumes that a DM-RS antenna port for PDCCH receptions in the CORESET is quasi co-located with the one or more DL RS configured by a TCI state indicated by a MAC CE activation command for the CORESET

If the UE is provided *dl-OrJointTCI-StateList* and

- is not provided *coresetPoolIndex* or is provided *coresetPoolIndex* with a value of 0 for first CORESETs on an active DL BWP of a serving cell,

- is provided *coresetPoolIndex* with a value of 1 for second CORESETs on the active DL BWP of the serving cells, and

- is provided *followUnifiedTCI-State* for the first and second CORESETs, that do not include a CORESET with index 0 and are associated only with USS sets and/or Type3-PDCCH CSS sets, or with CSS sets other than Type3-PDCCH CSS sets,

the UE

- assumes that DM-RS antenna ports for PDCCH receptions in the first and second CORESETs, and DM-RS antenna ports for PDSCH receptions scheduled by DCI formats provided by PDCCH receptions in the first and second CORESETs, are quasi co-located with the reference signals provided by indicated TCI-State specific to the first and second CORESETs, respectively

- transmits PUSCH scheduled by DCI formats provided by PDCCH receptions in the first and second CORESETs using a spatial domain filter corresponding to *TCI-State* or *TCI-UL-State* specific to the first and second CORESETs, respectively.

If a UE is provided two *coresetPoolIndex* values 0 and 1 for first and second CORESETs, or is not provided *coresetPoolIndex* value for first CORESETs and is provided *coresetPoolIndex* value of 1 for second CORESETs, respectively, a MAC CE command activating TCI states for the first or second CORESETs [11, TS 38.321] can include *coresetPoolIndex* value 0 or 1

(continued)

> - if the UE is provided *SSB_MTC_AdditionalPCI,* the activated TCI states for the first and/or the second CORESETs are for *physCellId* from *ServingCellConfigCommon* and the activated TCI states for either the first or the second CORESETs can be for *physCellId* from *additionalPCI.*
>
> If a UE is provided by *simultaneousTCI-UpdateList1* or *simultaneousTCI-UpdateList2* up to two lists of cells for simultaneous TCI state activation, the UE applies the antenna port quasi co-location provided by one or two *TCI-State* each with same activated *tci-StateID* value, to CORESETs with a same index in all configured DL BWPs of all configured cells in a list determined from a serving cell index, where one or two *tci-StateID,* the CORESET index, and the serving cell index are provided by a MAC CE command.

That is, when the UE receives a single TCI state for a CORESET, or when a MAC CE activation command is received for one or two of the TCI states provided for the CORESET, the terminal may assume that the DM-RS antenna ports associated with PDCCH receptions within the CORESET are in a QCL relationship with one or more DL RSs configured by the TCI states.

A TCI state may be indicated by being divided into two states. As an example, when a terminal is provided with dl-OrJointTCI-StateList, TCI states may be indicated through a combination of two TCI states (a first TCI state, a second TCI state, the first TCI state and the second TCI state, and none). As an example, when the terminal indicates the first TCI state through apply-IndicatedTCISate, the terminal may assume that a reference signal provided by the first TCI state is in the QCL relationship with a DM-RS antenna port for PDCCH reception.

When a UE is provided with dl-OrJointTCI-StateList and is not provided with coresetPoolIndex or is provided coresetPoolIndex with a value of 0 for a first CORESET in an activated DL BWP of a serving cell, the UE may assume that the DM-RS antenna ports for PDCCH reception in the first and second CORESETs and the DM-RS antenna ports for PDSCH reception scheduled by the DCI format provided by PDCCH receptions in the first and second CORESETs are respectively in a QCL relationship with a reference signal provided by a TCI state specific to each of the first and second CORESETs. Additionally, the UE may transmit PUSCH scheduled by the DCI format provided by PDCCH receptions in the first and second CORESETs using the spatial domain filter corresponding to the TCI state specific to each of the first and second CORESETs.

The TCI state may be used to transmit an uplink signal. A terminal may use the following procedure for uplink power control.

> ### 7 Uplink Power control
>
> Uplink power control determines a power for PUSCH, PUCCH, SRS, and PRACH transmissions.
>
> A UE does not expect to simultaneously maintain more than four pathloss estimates per serving cell for all PUSCH/PUCCH/SRS transmissions as described in clauses 7.1.1, 7.2.1, and 7.3.1, except for SRS transmissions configured by *SRS-PosResourceSet* as described in clause 7.3.1. If the UE is provided a number of RS resources for pathloss estimation for PUSCH/PUCCH/SRS transmissions that is larger than 4, the UE maintains for pathloss estimation RS resources corresponding to RS resource indexes $q_d$ as described in clauses 7.1.1, 7.2.1, and 7.3.1. If an RS resource updated by MAC CE, as described in clauses 7.1.1, 7.2.1 and 7.3.1, is one from the RS resources the UE maintains for pathloss estimation for PUSCH/PUCCH/SRS transmissions, the UE applies the pathloss estimation based on the RS resources starting from the first slot that is after slot
>
> $$k + 3 \cdot N_{\text{slot}}^{\text{subframe},\mu} + 2^{\mu} \cdot k_{\text{mac}}$$ where $k$ is the slot where the UE would transmit a PUCCH or PUSCH with HARQ-ACK information for the PDSCH providing the MAC CE, $\mu$ is the SCS configuration for the PUCCH or PUSCH, respectively, that is determined in the slot when the MAC CE command is applied and $k_{\text{mac}}$ is a number of slots for SCS configuration $\mu = 0$ provided by *kmac* or $k_{\text{mac}} = 0$ if *kmac* is not provided.
>
> A PUSCH/PUCCH/SRS/PRACH transmission occasion $i$ is defined by a slot index $n_{s,f}^{\mu}$ within a frame with system frame number *SFN,* a first symbol S within the slot, and a number of consecutive symbols L. For a PUSCH transmission with repetition Type B, a PUSCH transmission occasion is a nominal repetition [6, TS 38.214].
>
> In the remaining of this clause, if a UE is provided *TCI-State* in *dl-OrJointTCI-StateList* or *TCI-UL-State,* and for each indicated one or two *TCI-State* or *TCI-UL-State* of a PUSCH, PUCCH, or SRS transmission occasion as described in [6, TS 38.214]

(continued)

| |
|---|
| - in clauses 7.1.1, 7.2.1, and 7.3.1, the RS index $q_d$ for obtaining the downlink pathloss estimate for PUSCH, PUCCH, and SRS transmission is provided by *pathlossReferenceRS-Id-r17* associated with or included in the indicated *TCI-State* or *TCI-UL-State* except for SRS transmission that is not provided *followUnifiedTCI-StateSRS* |
| - in clause 7.1.1, if *p0AlphaSetforPUSCH* is provided, the values of $P_{O\_UE\_PUSCH,b,f,c}(j)$, $\alpha_{b,f,c}(j)$, and the PUSCH power control adjustment state *l* are provided by *p0AlphaSetforPUSCH* associated with the indicated *TCI-State* or *TCI-UL-State* |
| - in clause 7.2.1, if *p0AlphaSetforPUCCH* is provided, the values of $P_{O\_UE\_PUCCH}(q_u)$ and the PUCCH power control adjustment state *l* are provided by *p0AlphaSetforPUCCH* associated with the indicated *TCI-State* or *TCI-UL-State* |
| - in clause 7.3.1, if *p0AlphaSetforSRS* is provided, |
|     - if *followUnifiedTCI-StateSRS* is provided for a SRS resource set, the values of $P_{O\_UE\_SRS,b,f,c}(q_s)$, $\alpha_{SRS,b,f,c}(q_s)$, and SRS power control adjustment state *l* are provided by *p0AlphaSetforSRS* associated with the indicated *TCI-State* or *TCI-UL-State* |
|     - else, if *followUnifiedTCI-StateSRS* is not provided for a SRS resource set and for a SRS resource from the SRS resource set, the values of $P_{O\_UE\_SRS,b,f,c}(q_s)$, $\alpha_{SRS,b,f,c}(q_s)$, and SRS power control adjustment state *l* are provided by *p0AlphaSetforSRS* associated with *TCI-State* or *TCI-UL-State* of an SRS resource with lowest *SRS-ResourceId* in the SRS resource set and a RS index $q_d$ for obtaining a pathloss estimate for the SRS transmission is provided by *pathlossReferenceRS-Id-r17* associated with or included in the *TCI-State* or *TCI-UL-State* of an SRS resource with lowest *SRS-ResourceId* in the SRS resource set |
| $P_{O\_SRS,b,f,c}(q_s)$ is the sum of the component $P_{O\_UE\_SRS,b,f,c}(q_s)$ and a component *p0* provided by *SRS-ResourceSet* corresponding to the SRS resource set. |
| In the remaining of this clause, if a PDCCH reception by a UE includes two PDCCH candidates from corresponding search space sets, as described in clause 10.1 |
|     - a PDCCH monitoring occasion is the union of the PDCCH monitoring occasions for the two PDCCH candidates |
|     - the end of the PDCCH reception is the end of the PDCCH candidate that ends later |
| The PDCCH reception includes the two PDCCH candidates also when the UE is not required to monitor one of the two PDCCH candidates as described in clauses 10 (except clause 10.4), 11.1, 11.1.1 and 17.2. |

The uplink power control may be used to determine power for PUSCH, PUCCH, SRS, or PRACH transmission. The UE may be configured not to simultaneously maintain four or more pathloss estimations for PUSCH/PUCCH/SRS transmissions per serving cell.

For PUSCH, PUCCH, SRS, or PRACH transmission, a transmission occasion may be defined by a slot index within a frame, a first symbol within a slot, and the number of consecutive symbols. When a terminal receives TCI states from dl-OrJointTCI-StateList, an RS index for downlink path loss estimation for PUSCH, PUCCH, or SRS transmission may be provided for each of the one or two TCI states associated with the PUSCH, PUCCH, or SRS transmission occasion.

Power control values may be set explicitly or implicitly. As an example, when followUnifiedTCI-StateSRS is set, power control values are provided from p0AlphaSetforSRS associated with a TCI state. When followUnifiedTCI-StateSRS is not set, power control values and a RS index for path loss estimation may be provided from a TCI state associated with an SRS resource with the lowest SRS-ResourceId. Here, a total SRS power value may be determined based on the sum of an individual SRS power control value and an additional component according to an SRS resource set.

Hereinafter, an initial access procedure between a terminal and a base station will be described. When an initial access procedure with the base station is performed due to reasons such as the terminal's power on/off operation or coverage loss, an identification procedure between the base station and the terminal may be required. First, the terminal may perform an initial cell search operation with the base station. The terminal may perform monitoring to receive a synchronization signal. The synchronization signal may be at least one of a primary synchronization signal (PSS) and a secondary synchronization signal (SSS). The terminal may receive a physical broadcast channel (PBCH) signal from the base station to obtain broadcast information within a cell. The terminal may obtain information on the cell using at least one of an MIB or an SIB based on a physical broadcast channel. A block containing a PSS, an SSS, and a PBCH may be referred to as a synchronization signal block (SSB).

The terminal may perform a random access procedure. The terminal may transmit a preamble to the base station and receive a random access response (RAR) from the base station. A RAR message may contain a temporary identifier. The terminal may transmit MSG3 (or an RRC connection request message) using the scheduling information in the RAR, and the base station may perform a contention resolution procedure by transmitting MSG4 (or a contention resolution message) to the terminal in response to MSG3

The base station may perform beam management based on a RACH occasion that is used to transmit the preamble used in the random access procedure. As an example, the base station may determine a beam over which the terminal receives the synchronization signal based on the RACH occasion in which the preamble is transmitted. As described above, a synchronization signal may also be included as a reference signal for indicating a QCL relationship, and the QCL relationship may be configured based on the SSB received through the initial access procedure.

In addition, a channel measurement procedure may be performed for beam management. The terminal may receive a reference signal from the base station. The terminal may report channel state information (CSI) to the base station based on the reference signal. The CSI may include at least one of reference signal received power (RSRP), reference signal received quality (RSRQ), and a signal-to-noise ratio (SNR). The base station may use the received CSI to adjust beamforming for the terminal or optimize radio resource allocation. For channel measurement, the base station may transmit configuration information for channel measurement to the terminal. The configuration information for channel measurement may include information associated with a measurement target and information on a measurement interval.

Configurations of beams of the base station and the terminal may be managed through an artificial intelligence (AI). For convenience of description, a beam set A is a beam set for which measurement is performed using an input of an AI/ML model, and a beam set A refers to a beam set that is determined based on inference of the AI/ML model. The beam set A and the beam set B may be beam information regarding the same frequency range.

The AI may be used to infer a spatial domain DL beam for the beam set A based on the measurement of the beam set B. As another example, the AI may be used to infer a temporal DL beam for the beam set A based on past measurement results of the beam set B. Here, the beam set A, and the beam set B may be different sets, or the beam set B may be a subset of the beam set A.

In addition, inputs of the AI model may be formed as various combinations. As an example, the input for the AI may include at least one of L1-RSRP measurements based on the beam set B, other auxiliary information, a channel impulse response (CIR) based on the beam set B, or a downlink TX/Rx beam ID associated with L1-RSRP measurement for the beam set B.

The above-described AI model may be designed to infer a beam including at least one of a DL Rx beam and a DL TX beam. In addition, the output of the AI model may include at least one of a TX beam, a Rx beam, a L1-RSRP of the TX beam, a L1-RSRP of the Rx beam, an angle of the TX beam, an angle of the Rx beam, and other information.

A beam management method using an AI model is not limited to the above-described method. The AI model may be configured in various manners by configuring an input and an output from various combinations including configurations of the beam set A and the beam set B, performance monitoring, data collection, and auxiliary information.

In addition, learning and inference methods may also be implemented in various manners. As an example, an AI may be learned or trained using an AI/ML model. Learning and training may be performed by a network or a UE. In addition, learning and inference may be performed in different devices. As an example, learning may be performed in a network, and inference may be performed in a terminal. A portion of learning may be performed in a first device, and another portion of the learning may be performed in a second device, enabling split or distributed learning. Similar to learning, split inference may be performed using a plurality of devices. Input data for inference may also be generated in various manners. As an example, input data may be generated in a UE, and inference may be performed in a network using the input data. In addition, input data generated in a UE may be used for inference performed within the UE.

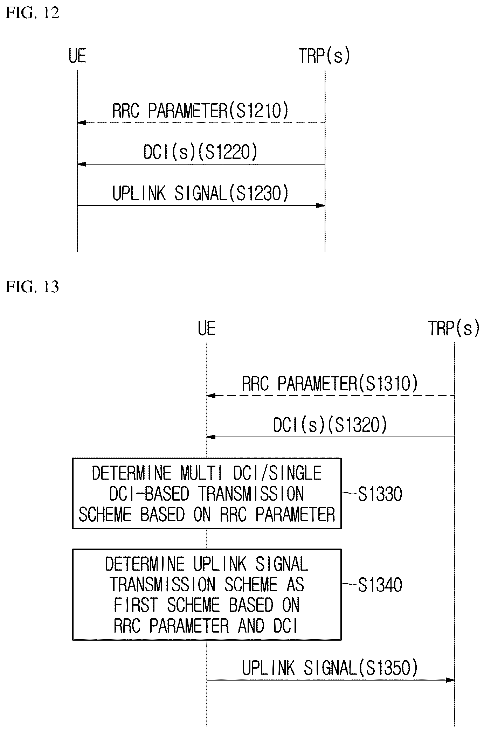

FIG. 12 illustrates an example of a procedure of transmitting an uplink signal according to an embodiment of the present disclosure. FIG. 12 exemplifies a method that is performed by a TRP and a terminal.

Referring to FIG. 12, in step S1210, the terminal may receive an RRC parameter from the TRP. According to an embodiment, the RRC parameter may include control information for transmitting an uplink signal.

In step S1220, the terminal may receive DCI from the TRP. The DCI is resource allocation information and may include scheduling information associated with a PDSCH or a PUSCH.

In step S1230, the terminal may transmit the uplink signal to the TRP.

Here, a method of determining a transmission scheme of the uplink signal is described above.

The WID for Rel-18 NR MIMO evolution discloses the following contents.

1. Study, and if justified, specify CSI reporting enhancement for high/medium UE velocities by exploitin g time-domain correlation/Doppler-domain information to assist DL precoding, targeting FR1, as follo ws:
- Rel-16/17 Type-II codebook refinement, without modification to the spatial and frequency domai n basis
- UE reporting of time-domain channel properties measured via CSI-RS for tracking

2. Specify extension of Rel-17 Unified TCI framework for indication of multiple DL and UL TCI states f ocusing on multi-TRP use case, using Rel-17 unified TCI framework.

3. Study, and if justified, specify larger number of orthogonal DMRS ports for downlink and uplink MU-MIMO (without increasing the DM-RS overhead), only for CP-OFDM,
- Striving for a common design between DL and UL DMRS
- Up to 24 orthogonal DM-RS ports, where for each applicable DMRS type, the maximum number of orthogonal ports is doubled for both single- and double-symbol DMRS

4. Study, and if justified, specify enhancements of CSI acquisition for Coherent-JT targeting FR1 and up t o 4 TRPs, assuming ideal backhaul and synchronization as well as the same number of antenna ports ac ross TRPs, as follows:
- Rel-16/17 Type-II codebook refinement for CJT mTRP targeting FDD and its associated CSI rep orting, taking into account throughput-overhead trade-off
- SRS enhancement to manage inter-TRP cross-SRS interference targeting TDD CJT via SRS capa city enhancement and/or interference randomization, with the constraints that 1) without consumi ng additional resources for SRS; 2) reuse existing SRS comb structure; 3) without new SRS root s equences
- Note: the maximum number of CSI-RS ports per resource remains the same as in Rel-17, i.e. 32

5. Study, and if justified, specify UL DMRS, SRS, SRI, and TPMI (including codebook) enhancements to enable 8 Tx UL operation to support 4 and more layers per UE in UL targeting CPE/FWA/vehicle/Ind ustrial devices
- Note: Potential restrictions on the scope of this objective (including coherence assumption, full/no n-full power modes) will be identified as part of the study.

6. Study, and if needed, specify the following items to facilitate simultaneous multi-panel UL transmissio n for higher UL throughput/reliability, focusing on FR2 and multi-TRP, assuming up to 2 TRPs and up to 2 panels, targeting CPE/FWA/vehicle/industrial devices (if applicable)
- UL precoding indication for PUSCH, where no new codebook is introduced for multi-panel simul taneous transmission
• The total number of layers is up to four across all panels and total number of codewords is up to two across all panels, considering single DCI and multi-DCI based multi-TRP operation.
- UL beam indication for PUCCH/PUSCH, where unified TCI framework extension in objective 2 i s assumed, considering single DCI and multi-DCI based multi-TRP operation
• For the case of multi-DCI based multi-TRP operation, only PUSCH+PUSCH, or PUCCH+P UCCH is transmitted across two panels in a same CC.

7. Study, and if justified, specify the following
- Two TAs for UL multi-DCI for multi-TRP operation
- Power control for UL single DCI for multi-TRP operation where unified TCI framework extensio n in objective 2 is assumed.
For the case of simultaneous UL transmission from multiple panels, the operation will only be limited t o the objective 6 scenarios.

As discussed above, in Rel-18 NR MIMO enhancement, the Rel-17 unified TCI framework should be extended to indicate multiple downlink and uplink TCI states (DL, UL TCI states) focusing on use of an M-TRP scheme. In case of an uplink signal transmission process, simultaneous multi-panel UL transmission is required to secure higher UL throughput and reliability. Here, the simultaneous multi-panel UL transmission may support up to 2 TRPs and up to 2 panels. In particular, a single-DCI based simultaneous multi-panel UL transmission method, and a multi-DCI based simultaneous multi-panel UL transmission method should be improved.

According to what has been discussed so far, an uplink channel, that is, each of a PUCCH and a PUSCH may be transmitted in the following manner. First, the PUCCH may be repeatedly transmitted by an existing Rel-17 TDM-based transmission scheme or may be transmitted by a Rel-18 STxMP SFN (single frequency network) scheme. Both of the two schemes for transmitting the PUCCH may have two TCI states for one PUCCH resource.

Next, the PUSCH may be repeatedly transmitted by a Rel-17 TDM-based scheme similar to the PUCCH or may be transmitted by a Rel-18 STxMP SFN scheme and a spatial division multiplexing (SDM) scheme. All of the PUSCH transmission schemes may be single-DCI based transmission schemes. In addition, the PUSCH may be configured with two SRS resource sets.

In Rel-18 NR MIMO enhancement, transmission schemes of a PUCCH and a PUSCH and a switching (or indication or distinction) scheme for each transmission scheme have been discussed as follows.

---

**RAN1 #110-bis**

Agreement

Support dynamic switching between SDM scheme of single-DCI based STxMP PUSCH and sTRP transmission

    FFS the indication of dynamic switching

    FFS: max number of layers when switching to sTRP transmission

Agreement

Support SFN-based transmission scheme for STxMP PUSCH transmission in single-DCI based mTRP system in Rel-18.

Agreement

For the switching between SDM scheme of single-DCI based STxMP PUSCH and Rel-17 mTRP PUSCH TDM scheme, Alt2 is supported. FFS whether Alt1 is supported in addition to Alt2.

    • Altl: Support dynamic switching between SDM scheme of single-DCI based STxMP PUSCH and Rel-1 7 mTRP PUSCH TDM scheme

        o FFS: how to support dynamic switching, e.g., using the indicated PUSCH repetition number

        o Note: It is up to gNB implementation to configure SDM scheme of single-DCI based STxMP P USCH or Rel-17 mTRP PUSCH TDM scheme or both of them in RRC. Dynamic switching bet ween them is only when both schemes are configured in RRC.

    • Alt2: Support RRC-based switching between SDM scheme of single-DCI based STxMP PUSCH and Re 1-17 mTRP PUSCH TDM scheme

---

**RAN1 #111**

Agreement

Support the SFN scheme for single-DCI based STxMP PUCCH transmission.

Agreement

    • Support DCI-based dynamic switching between SFN scheme of single-DCI based STxMP PUSCH and s TRP transmission

        o The DCI field "SRS resource set indicator" is used to indicate the switching between SFN sche me and sTRP transmission.

    • (Conclusion) There is no consensus to support DCI-based dynamic switching between SFN scheme and SDM scheme

Agreement

For the SFN scheme of single-DCI based STxMP PUSCH:

    • Configure two SRS resource sets for CB or NCB. o FFS: Number of SRS resources of SRS resource set, and number of SRS ports of SRS resource

---

(continued)

| RAN1 #111 |
| --- |

**RAN1 #111**

- The DCI indicates two SRI fields and TPMI fields for SFN transmission,
- On the indication of number of layers for CB and NCB PUSCH:
    - Altl: Similar to rel-17 mTRP TDM scheme, the number of layers is indicated by the first SRI fi eld (for NCB PUSCH) or the first TPMI field (for CB PUSCH);

Agreement

For dynamic switching between SDM scheme of single-DCI based STxMP PUSCH and sTRP transmission:

- Use the 2-bit "SRS resource set indicator" DCI field to dynamically indicate the sTRP or SDM transmiss ion.
- FFS: how to interpret each codepoint of "SRS resource set indicator".
- For the maximal number of layers for sTRP transmission, down-select:
    - Option1: The maximal number of layers of sTRP transmission is configured by the maxRank (o r Lmax) in current spec
    - Option2: Configuring one additional maximal numbers of layers for sTRP transmission, in add ition to maxRank in current spec.
- Down-select one from the following for maximal number of layers of SDM transmission:
    - Alt1: Configure one single maximal number of layers (separate from the maximal number(s) of layers for sTRP), that is applied to the first SRS resource set and the second SRS resource set, s eparately.
    - Alt1a: The maxRank (or Lmax) in current spec is also applied to the first SRS resource set and t he second SRS resource set, separately.
    - Alt2: Configure separate maximal numbers of layers for the first SRS resource set and the seco nd SRS resource set
    - Alt3: no dedicated configuration for SDM. The maximal number(s) of layers of sTRP and the U E capability reporting for SDM are used to determine the maximal number of layers of SDM tra nsmission.
    - Alt4: The maximal number(s) of layers in above Option1/2 also applied to the first SRS resourc e set and the second SRS resource set, separately.
- FFS: To ensure the same size of DCI for sTRP and SDM cases, how to use/interpret the TPMI/SRI field (s) and whether to do reserved bit or zero padding.

Agreement

For SDM scheme single-DCI based STxMP transmission, when L1 and L2 layers are indicated/determined by two TPMI fields of CB PUSCH or two SRI fields of NCB PUSCH respectively:

- The first L1 indicated DMRS ports correspond to the L1 layers indicated by the first TPMI or SRI field
- The remaining L2 indicated DMRS ports correspond to the L2 layers indicated by the second TMPI or S RI field
- Support at least one of the following options for indication of layer combination {1+2}:
    - Option 1: new entry is added to DMRS table, e.g., {0, 2, 3}, {2, 0, 1}.
    - Option 2: use DCI field (e.g., SRS resource set indicator) to indicate that for layer combination {1+2}, the first two indicated DMRS ports correspond to the 2 layers indicated by the second T PMI or SRI field and the rest one indicated DMRS port correspond to the layer indicated by the first TPMI or SRI field.

(continued)

| RAN1 #111 |
| --- |
| ◦ Option 3: For layer combination of {1+2}, the DMRS port in the CDM group with only one por t is mapped to the SRI/TPMI field indicating one layer, and the DMRS ports in the CDM group with 2 ports are mapped to the SRI/TPMI field indicating 2 layers<br>o Other options are not precluded |

| RAN1 #112 |
| --- |
| Agreement<br>Confirm the working assumption with the following updates:<br>Support the following scheme for STxMP PUSCH transmission in single-DCI based mTRP system in Rel-18:<br>   • SDM scheme with one CW<br>Working Assumption<br>For dynamic switching between STxMP SDM scheme and sTRP transmission, support the following:<br>   • For sTRP transmission: The maximal number of layers of sTRP transmission is configured by the maxR ank (or Lmax) as in current spec (i.e., Option 1)<br>   • For SDM scheme: configure one single maximal number of layers (separate from maxRank (or Lmax) f or sTRP) that is applied to the first SRS resource set and the second SRS resource set, separately (i.e., Al t1)<br>   • FFS: Whether/How to enable that the total number of used PUSCH antenna ports for the SDM and sTRP is the same.<br>      ◦ Note: This corresponds to the case that digital ports are shared between the panels<br>      o Note: RAN1 supports both implementations that digital ports are shared or separate among pan els<br>Agreement<br>On dynamic switching between STxMP SFN scheme and sTRP transmission:<br>   • The legacy maxRank/Lmax is applied to sTRP transmission<br>   • For configuration of SFN,<br>      ◦ Alt2: Configure a separate parameter for the maximal number of layers for STxMP SFN |

According to Rel-18 NR MIMO enhancement, an uplink signal of a PUCCH and/or a PUSCH may be transmitted by a Rel-17 mTRP TDM-based repeated transmission scheme, a Rel-18 STxMP SFN-based transmission scheme, and an SDM-based transmission scheme. In this case, in a PUSCH transmission process, switching of a transmission scheme between the SFN scheme and an sTRP scheme, switching of a transmission scheme between the SFN scheme and the mTRP scheme, switching of a transmission scheme between the SDM scheme and the TDM scheme, and switching of a transmission scheme between the SDM scheme and the sTRP scheme may be supported. Some embodiments of such switching of the uplink signal transmission scheme (e.g., switching between SFN and sTRP) may be performed using an SRS resource set indicator field of DCI. However, some embodiments of switching of the uplink signal transmission scheme have not been defined yet. Therefore, a method for performing a switching (or indication or distinction) scheme of the uplink signal transmission scheme may be required. Specifically, a method for switching (or indication or distinction) of the uplink signal transmission scheme based on an RRC signal may be required.

Accordingly, the present disclosure may provide a method for switching (or indicating or distinguishing) two (or more) transmission schemes among a TDM scheme, an SFN scheme, an SDM scheme, an sTRP scheme, and an mTRP scheme based on an RRC signal for each of a PUCCH and/or a PUSCH in an NR MIMO environment.

FIG. 13 illustrates an example of a procedure of transmitting an uplink signal according to an embodiment of the present disclosure. FIG. 13 exemplifies a method that is performed by a TRP and a terminal.

Referring to FIG. 13, in step S1310, the terminal may receive an RRC parameter from the TRP. According to an embodiment, the RRC parameter may include information indicating one transmission scheme between a single DCI-based transmission scheme and a single DCI-based transmission scheme of an uplink signal. In addition, the RRC parameter may include information indicating a transmission scheme of an uplink signal.

In step S1320, the terminal may receive DCI from the TRP. The DCI is resource allocation information and may include scheduling information associated with a PDSCH or a PUSCH.

In step S 1330, the terminal may determine a transmission scheme of an uplink signal as one DCI-based transmission scheme between a single-DCI based transmission scheme and a multi-DCI based transmission scheme based on an RRC parameter.

In step S1340, the terminal may determine the uplink signal transmission scheme as a first scheme based on the RRC parameter and DCI.

In step S1350, the terminal may transmit the uplink signal to the TRP according to the determined single or multi-DCI based transmission scheme and the uplink signal transmission scheme. When the DCI-based transmission scheme of the uplink signal is the single-DCI based transmission scheme, the terminal may transmit the uplink signal to one TRP. On the other hand, when the DCI-based transmission scheme of the uplink signal is the multi-DCI based transmission scheme, the terminal may transmit the uplink signal to one or more TRPs.

That is, the terminal may determine the transmission scheme of the uplink signal as one DCI-based transmission scheme between the single-DCI based transmission scheme and the multi-DCI based transmission scheme. In addition, the terminal may determine the uplink signal transmission scheme based on a DCI-based transmission scheme, the RRC parameter, and one or more DCI.

First, the single-DCI based uplink transmission scheme may support the SFN scheme for single-DCI based STxMP PUCCH transmission. Similar to the STxMP PUSCH transmission scheme, the single-DCI based uplink transmission scheme may be switched between the SFN scheme and the mTRP TDM scheme or between the SFN scheme and the sTRP scheme through an RRC configuration for each PUCCH resource. According to an embodiment, when two joint or UL TCI states are applied to each PUCCH resource, the uplink signal transmission scheme may be determined according to the RRC configuration (e.g., TDM or SFN). When a PUCCH resource is transmitted based on the sTRP-based scheme, a PUCCH resource applying one joint or UL TCI state may be indicated by DCI. That is, a PUCCH transmission scheme is configured by a TRP (in advance) and may be switched. According to another embodiment, the uplink transmission scheme may be determined according to whether an RRC signal is configured (e.g., TDM or SFN). That is, an RRC parameter may configure the uplink transmission scheme (in advance) as one of a single-DCI based TDM scheme and a single-DCI based SFN scheme. For example, when an RRC signal does not configure a transmission scheme of a PUCCH resource as the SFN scheme in advance, the PUCCH resource may be transmitted in the TDM scheme. On the other hand, when an RRC signal configures a transmission scheme of a PUCCH resource as the SFN scheme in advance, the PUCCH resource may be transmitted in the SFN scheme.

By the single-DCI based uplink transmission scheme, the transmission scheme of an uplink signal may be determined through the following operations.

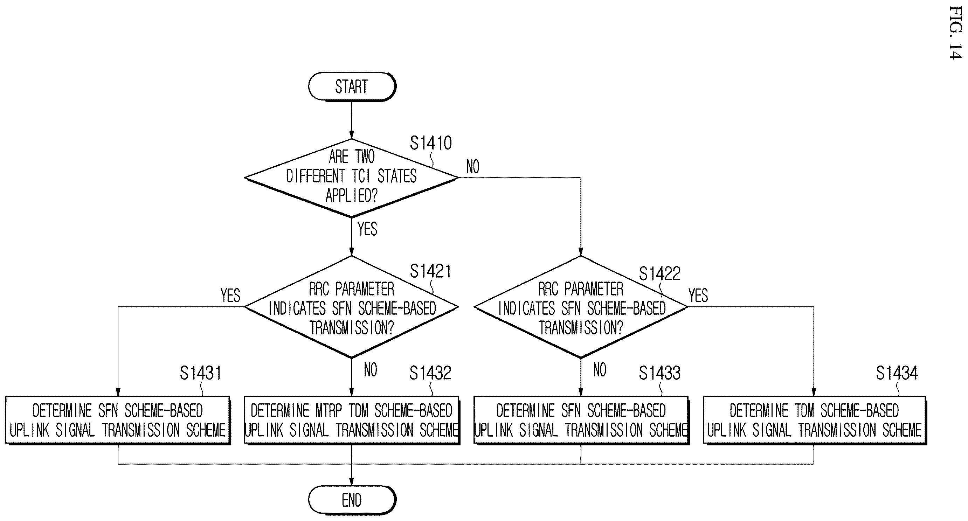

FIG. 14 illustrates an example of a procedure of determining a transmission scheme of a single-DCI based uplink signal according to an embodiment of the present disclosure. FIG. 14 exemplifies a method performed by a terminal.

In step S 1410, the terminal may determine whether two different TCI states are applied. When two different TCI states are applied, a transmission scheme of an uplink signal may be determined as a multi-transceiver based transmission scheme. On the other hand, when two different TCI states are not applied, the transmission scheme of the uplink signal may be determined as a single transceiver based transmission scheme.

When two different TCI states are applied, in step S1421, the terminal may determine whether the RRC parameter indicates an SFN scheme.

When the RRC parameter indicates the SFN scheme, in step S 1431, the terminal may determine a transmission scheme of an uplink signal as an SFN scheme-based transmission scheme. Here, the SFN scheme may be a multi-transceiver based SFN scheme.

On the other hand, when the RRC parameter does not indicate the SFN scheme, in step S1432, the terminal may determine the transmission scheme of the uplink signal as a multi-transceiver TDM-based transmission scheme.

On the other hand, when two different TCI states are applied, in step S1422, the terminal may determine whether the RRC parameter indicates an SFN scheme.

When the RRC parameter indicates the SFN scheme, in step S1433, the terminal may determine a transmission scheme of an uplink signal as an SFN scheme-based transmission scheme. Here, the SFN scheme may be a single-transceiver based SFN scheme.

On the other hand, when the RRC parameter does not indicate the SFN scheme, in step S 1434, the terminal may determine the transmission scheme of the uplink signal as a TDM-based transmission scheme. Here, the TDM scheme may be a single-transceiver based TDM scheme.

On the other hand, in case of a communication system supporting multi-DCI based TRP transmission, different PUSCHs may be transmitted through a multi-DCI based STxMP scheme using two SRS resource sets (multi-DCI based STxMP PUSCH+PUSCH). In the multi-DCI based STxMP scheme, when two SRS resource sets are configured, DCI 0_1 and 0_2 may include an SRS resource set indicator field and an SRI/TPMI field. However, in case of the multi-DCI based system, the SRS resource set may be associated with a coresetPoolIndex value. Here, DCI 0_1 and 0_2 may not require the SRS resource set indicator and the SRI/TPMI field. Accordingly, it may be required to switch a transmission scheme between a single-DCI transmission scheme and a multi-DCI transmission scheme based on RRC.

According to the present disclosure, a transmission scheme of an uplink signal may be determined based on presence or absence of a configuration of an RRC signal. Here, the transmission scheme of the uplink signal may be determined as one transmission scheme among a TDM scheme, an SDM scheme, an SFN scheme, or a multi-DCI-based transmission scheme. According to an embodiment, an RRC parameter may (pre-)configure the uplink signal transmission scheme as one of a single-DCI based TDM scheme and/or a single-DCI based SDM scheme and/or a single-DCI based SFN scheme and/or a multi-DCI based PUSCH+PUSCH.

According to an embodiment of the present disclosure, when an RRC parameter is present, but two coresetPoolIndex values for transmission of an uplink signal are not configured, the uplink signal may be transmitted by a single-DCI based SDM transmission scheme or a single-DCI based SFN transmission scheme. Alternatively, the RRC parameter may configure a transmission scheme of the uplink signal as a single-DCI based SDM scheme or a multi-DCI based PUSCH+PUSCH scheme.

When the RRC parameter is not present and two coresetPoolIndex values for transmission of an uplink signal are not configured, the uplink signal may be transmitted by a single-DCI based TDM scheme. Alternatively, the RRC parameter may configure a transmission scheme of the uplink signal as a single-DCI based TDM scheme. When the RRC parameter is not present and two coresetPoolIndex values for UL transmission are configured, the uplink signal may be transmitted by a multi-DCI based PUSCH+PUSCH. Alternatively, the RRC parameter may configure the transmission scheme of the uplink signal as a multi-DCI based PUSCH+PUSCH scheme.

When two SRS resource sets are used and two coresetPoolIndex values are configured, a transmission scheme of an uplink signal may be configured as a multi-DCI based PUSCH+PUSCH scheme. When two SRS resource sets are used and two coresetPoolIndex values are configured, DCI (e.g., DCI 0_1 or DCI 0_2) may not include an SRS resource set indicator and a second SRI/TPMI field. In addition, the terminal may identify that the DCI (e.g., DCI 0_1 or DCI 0_2) does not include the SRS resource set indicator and the second SRI/TPMI field in an explicit manner or an implicit manner.

A method of determining a DCI-based transmission scheme of an uplink signal may be described as follows.

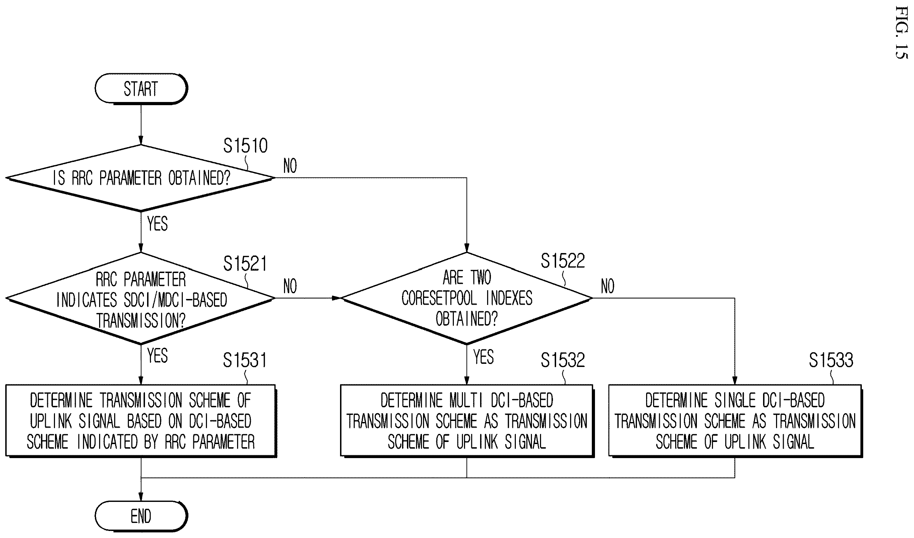

FIG. 15 illustrates an example of a procedure of determining a DCI-based transmission scheme of an uplink signal according to an embodiment of the present disclosure. FIG. 15 exemplifies a method performed by a terminal.

In step S1510, the terminal may determine whether an RRC parameter is obtained.

When the RRC parameter is obtained, in step S1521, the terminal may determine whether the RRC parameter indicates a single-DCI based transmission scheme and/or a multi-DCI based transmission scheme. Here, the RRC parameter may include a parameter indicating one DCI-based transmission scheme of a single-DCI based transmission scheme and a multi-DCI based transmission scheme.

When the RRC parameter indicates the single-DCI based transmission scheme and/or the multi-DCI based transmission scheme, in step S1531, the terminal may determine a DCI-based transmission scheme of an uplink signal based on a DCI-based scheme indicated by the RRC parameter. That is, the terminal may determine the DCI-based transmission scheme of the uplink signal as a single or multi-DCI-based transmission scheme based on the RRC parameter.

When the terminal does not obtain the RRC parameter, or when the RRC parameter does not indicate the single-DCI based transmission scheme and/or the multi-DCI based transmission scheme, the terminal may determine whether two coresetPoolIndex values are obtained.

When the terminal obtains two coresetPoolIndex values, in step S1532, the terminal may determine a transmission scheme of the uplink signal as a multi-DCI based transmission scheme.

On the other hand, when the terminal fails to obtain two coresetPoolIndex values, in step S1533, the terminal may determine the transmission scheme of the uplink signal as a single-DCI based transmission scheme.

Here, the transmitted uplink signal may be a signal of a PUSCH channel but may also be a signal of a PUCCH channel.

When a PUCCH resource is transmitted, a transmission scheme of a PUCCH may be configured based on one or more introduced RRC parameters. According to an embodiment, the introduced one or more RRC parameters may configure an STxMP SFN transmission scheme for each PUCCH. In this case, when the RRC parameter is configured (or regardless of whether the RRC parameter is configured) and two indicated TCI states are applied to the corresponding PUCCH, the corresponding PUCCH (all or part) may be transmitted by the STxMP SFN scheme. That is, when two indicated TCI states are applied to one PUCCH, the corresponding PUCCH (all or part) may be transmitted by the STxMP SFN scheme. When one indicated TCI state is applied to the corresponding (one) PUCCH, all or part of the corresponding PUCCH may be transmitted by an sTRP scheme.

In a multi-DCI based uplink signal transmission scheme, a method of determining a transmission scheme of a PUCCH based on one or more RRC parameters may be described as follows.

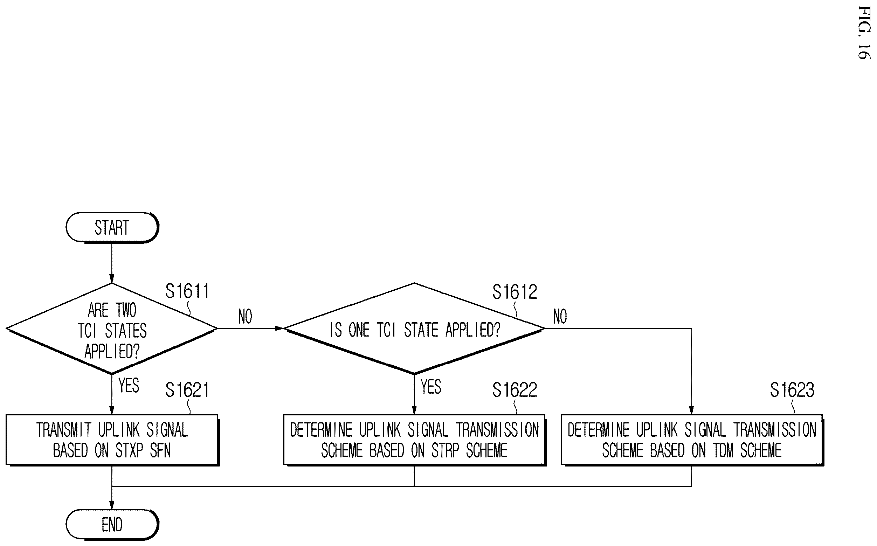

FIG. 16 illustrates an example of a procedure of determining a transmission scheme of a multi-DCI based uplink signal according to an embodiment of the present disclosure. FIG. 16 exemplifies a method performed by a terminal.

In step S 1610, the terminal may determine whether two different TCI states are applied.

When two different TCI states are applied, in step S1621, the terminal may determine a transmission scheme of an uplink signal as an STxMP SFN scheme.

When two different TCI states are not applied, in step S1612, the terminal may determine whether one TCI state is applied.

When one TCI state is applied, in step S1622, the terminal may determine the transmission scheme of the uplink signal as a single transceiver based scheme. On the other hand, when one TCI state is not applied, in step S1623, the terminal may determine the transmission scheme of the uplink signal as a TDM-based scheme.

Here, the transmitted uplink signal may be a signal of a PUCCH channel but may also be a signal of a PUSCH channel.

When a part of the PUCCH is transmitted by the STxMP SFN scheme, a remaining part of the PUCCH of the same component carrier may be repeatedly transmitted based on a Rel-17 TDM scheme or may not be repeatedly transmitted. Here, an indicator regarding whether repeated transmission based on the TDM scheme is supported may be configured. According to an embodiment, the indicator determining whether repeated transmission based on the TDM scheme is supported may be transmitted through an RRC signal.

According to another embodiment, a part of the PUCCH is transmitted by the STxMP SFN scheme, and a remaining part of the PUCCH of the same component carrier may be necessarily transmitted by the Rel-17 TDM scheme.

According to another embodiment, a part of the PUCCH is transmitted by the STxMP SFN scheme, and a remaining part of the PUCCH of the same component carrier may not be transmitted by the Rel-17 TDM repetition scheme. That is, in the same component carrier, all PUCCHs may be configured to be transmitted only by the same scheme.

That is, the UE may be configured not to simultaneously perform the STxMP SFN scheme and the TDM repeated transmission scheme for PUCCH transmission. An RRC parameter for configuring a PUCCH transmission scheme as the STxMP SFN scheme and an RRC parameter for configuring the PUCCH transmission scheme as the Rel-17 TDM repeated transmission scheme may be configured not to be set simultaneously.

A method of determining a transmission scheme of a part of the PUCCH transmitted by the STxMP SFN scheme and a remaining part of the PUCCH of the same component carrier as the TDM repeated transmission scheme may be described as follows.

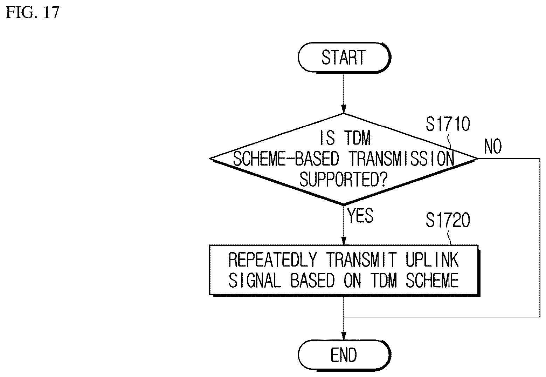

FIG. 17 illustrates an example of a procedure of determining repeated transmission of an uplink signal according to an embodiment of the present disclosure. FIG. 17 exemplifies a method performed by a terminal.

In step S1710, the terminal may determine whether TDM scheme transmission is supported for a part of an uplink channel.

That is, when TDM scheme transmission is supported for a remaining part of the uplink channel, in step S 1720, the terminal may repeatedly transmit an uplink signal based on the TDM scheme for the remaining part of the uplink channel.

A method of determining (or switching) a transmission scheme of a PUCCH may be used to determine (or switch) a transmission scheme of a PUSCH. In addition, a method of determining (or switching) a transmission scheme of a PUSCH may be used to determine (or switch) a transmission scheme of a PUCCH.

To configure a Rel-17 mTRP TDM scheme or a single-DCI based SDM scheme or a single-DCI based SFN scheme, two SRS resource sets may be configured. In addition, DCI (e.g., DCI 0_1 or DCI 0_2) may include an SRS resource set indicator and a second SRI/TPMI field.

Similar to Rel-17 mTRP TDM-based repeated transmission, repeated transmission may be used even when schemes of Rel-18 STxMP SFN and SDM are supported.

A method according to the present disclosure may be applied to codebook (CB)-based transmission or non-codebook (NCB)-based transmission during uplink signal transmission.

As described above, a transmission scheme of an uplink signal may be determined according to the method by the present disclosure, and the uplink signal may be transmitted by the determined transmission scheme. In addition, after transmitting the uplink signal, the transmission scheme of the uplink signal may be switched based on an RRC parameter and DCI, and the uplink signal may be transmitted by the switched transmission scheme.

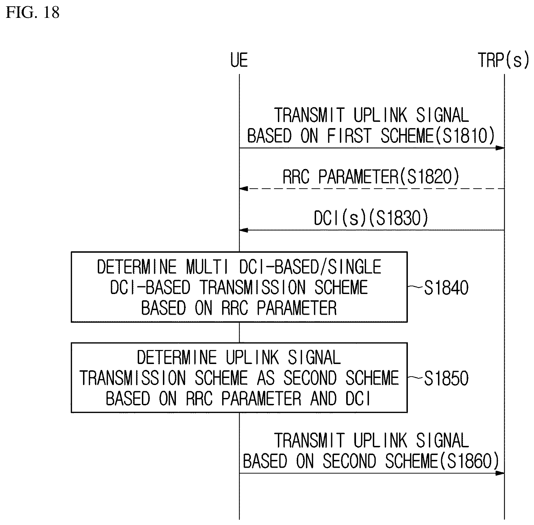

FIG. 18 illustrates an example of a procedure of transmitting an uplink signal according to an embodiment of the present disclosure. FIG. 18 exemplifies a method that is performed by a TRP and a terminal.

Referring to FIG. 18, in step S1810, the terminal may transmit an uplink signal to the TRP according to a first scheme that is a previously determined DCI-based transmission scheme and an uplink signal transmission scheme.

In step S1820, the terminal may receive an RRC parameter from the TRP. According to an embodiment, the RRC parameter may include information indicating one DCI-based transmission scheme between a single-DCI based transmission scheme and a single-DCI based transmission scheme of the uplink signal. In addition, the RRC parameter may include information indicating a transmission scheme of an uplink signal.

In step S1830, the terminal may receive DCI from the TRP. The DCI is resource allocation information and may include scheduling information associated with a PDSCH or a PUSCH.

In step S1840, the terminal may determine one DCI-based transmission scheme of a single-DCI based transmission scheme and a single-DCI based transmission scheme based on the RRC parameter.

In step S 1850, the terminal may determine the uplink signal transmission scheme as a second scheme based on the RRC parameter and DCI. Here, the second scheme may be the same as or may not be the same as the first scheme.

In step S1860, the terminal may transmit an uplink signal to the TRP according to the second scheme that is a determined DCI-based transmission scheme and an uplink signal transmission scheme.

That is, when a configuration of the RRC parameter and the DCI used to determine the first scheme is different from a configuration of the RRC parameter and the DCI used to determine the second scheme, the terminal may switch the DCI-based transmission scheme and the transmission scheme of the uplink signal and transmit the uplink signal to the TRP according to the switched scheme.

A method of switching the DCI-based transmission scheme and the transmission scheme of the uplink signal based on the configuration of the RRC parameter and the DCI may be described as follows.

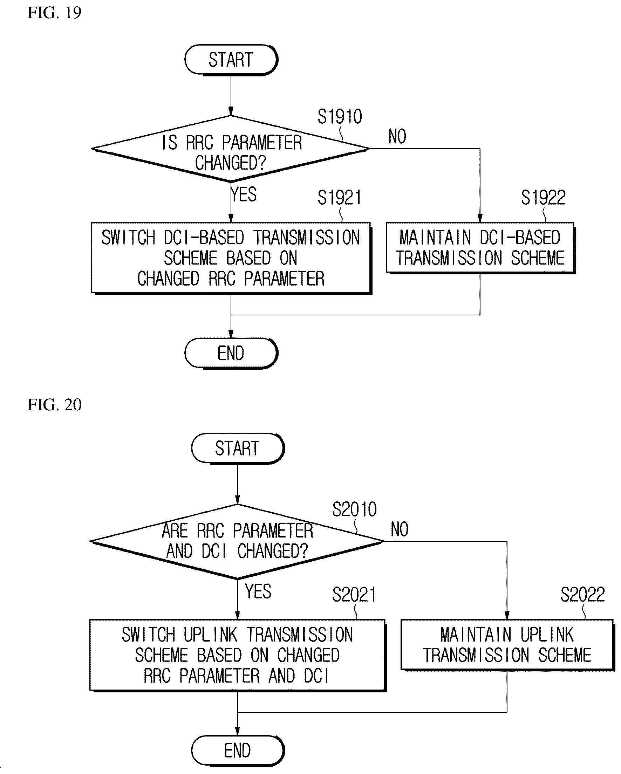

FIG. 19 illustrates an example of a procedure of determining whether to switch a DCI-based transmission scheme of an uplink signal according to an embodiment of the present disclosure. FIG. 19 exemplifies a method performed by a terminal.

In step S 1910, the terminal may determine whether an RRC parameter is changed.

When the RRC parameter is changed, in step S1921, the terminal may switch a DCI-based transmission scheme to a multi-DCI based or single-DCI based transmission scheme based on the changed RRC parameter.

On the other hand, when the RRC parameter is not changed, in step S1922, the terminal may maintain the multi-DCI based or single-DCI based transmission scheme.

FIG. 20 illustrates an example of a procedure of determining whether to switch a transmission scheme of an uplink signal according to an embodiment of the present disclosure. FIG. 20 exemplifies a method performed by a terminal.

In step S2010, the terminal may determine whether an RRC parameter and DCI are changed.

When the RRC parameter and the DCI are changed, in step S2021, the terminal may switch an uplink transmission scheme based on the changed RRC parameter and DCI.

On the other hand, when the RRC parameter is not changed, in step S2022, the terminal may maintain the uplink transmission scheme.

That is, according to what has been described above, a transmission scheme of an uplink signal may be determined in a manner described below.

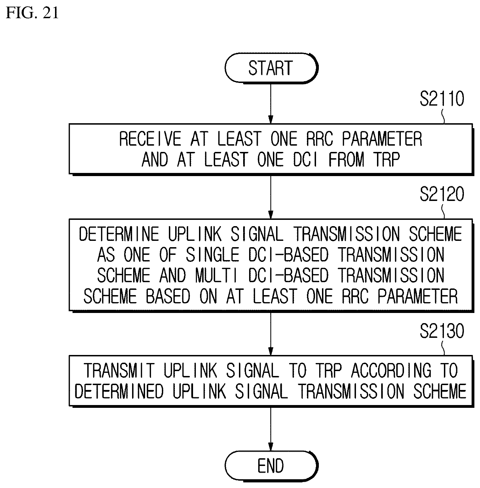

FIG. 21 illustrates an example of a procedure of determining a transmission scheme of an uplink signal according to an embodiment of the present disclosure. FIG. 21 exemplifies a method performed by a terminal.

In step S2110, the terminal may receive at least one RRC parameter and at least one of DCI from a TRP.

In step S2120, the terminal may determine an uplink signal transmission scheme as one of a single-DCI based transmission scheme and a multi-DCI based transmission scheme based on the at least one RRC parameter. Here, the uplink signal transmission scheme may be determined as the multi-DCI based transmission scheme when the at least one RRC parameter configures use of two SRS resource sets and includes two indices indicating different CORESET pools, and an SRS resource set indicator is omitted in the at least one DCI.

In step S2130, the terminal may transmit an uplink signal to the TRP according to the determined uplink signal transmission scheme.

Here, the at least one RRC parameter may further include a parameter indicating the uplink signal transmission scheme as the multi-DCI based transmission scheme.

Here, when the at least one RRC parameter does not include indices indicating different CORESET pools, the uplink signal transmission scheme may be determined as the single-DCI based transmission scheme.

Here, the two indices indicating different CORESET pools may be associated with the two SRS resource sets.

Here, the at least one DCI may schedule different physical uplink shared channels (PUSCHs).

Here, the uplink signal may be transmitted according to a codebook-based transmission scheme or a non-codebook-based transmission scheme.

Meanwhile, the TRP may receive a signal that is transmitted according to a transmission scheme corresponding to the operations described in FIG. 21.

When applying the method according to the present disclosure, a transmission scheme between a TDM scheme and an SFN scheme in a single DCI-based system may be switched based on an RRC signal. In addition, based on the RRC signal, switching of a transmission scheme may be performed efficiently in a multi-DCI based system among a multi-DCI based PUSCH+PUSCH transmission scheme and/or a single-DCI based TDM scheme, an SDM scheme, and an SFN scheme.

The operations of the method according to the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

In addition, the computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

A programmable logic device (e.g., a field-programmable gate array) may be used to perform some or all of functions of the methods described in the present disclosure. The field-programmable gate array may be operated with a microprocessor to perform one of the methods described in the present disclosure. In general, the methods are preferably performed by a certain hardware device.

While the present disclosure has been described above with reference to preferred embodiments of the present disclosure, those skilled in the art will understand that various modifications and variations may be made to the present disclosure without departing from the scope and spirit of the present disclosure, which are defined by the Claims appended hereto.

**Industrial Applicability**

The present invention may be used for a device that transmits and receives signals and for a transceiver.

**Claims**

1. A method for operating a terminal in a wireless communication system, the method comprising:

   receiving at least one radio resource control (RRC) parameter and at least one of downlink control information (DCI) from a transmission reception point (TRP);
   determining an uplink signal transmission scheme as one of single-DCI based transmission scheme and multi-DCI based transmission scheme based on the at least one RRC parameter; and
   transmitting an uplink signal to the TRP according to the determined uplink signal transmission scheme,
   wherein the uplink signal transmission scheme is determined as the multi-DCI based transmission scheme in a case in which the at least one RRC parameter configures use of two sounding reference signal (SRS) resource sets and includes two indexes indicating different control resource set (CORESET) pools and an SRS resource set indicator is omitted in the at least one of DCI.

2. The method of claim 1, wherein the at least one RRC parameter further includes a parameter that indicates the uplink signal transmission scheme as the multi-DCI based transmission scheme.

3. The method of claim 1, wherein, when the at least one RRC parameter does not include the indexes indicating different CORESET pools, the uplink signal transmission scheme is determined as the single-DCI based transmission scheme.

4. The method of claim 1, wherein the two indexes indicating different CORESET pools are associated with the two SRS resource sets.

5. The method of claim 1, wherein the at least one of DCI schedules different physical uplink shared channels (PUSCHs).

6. The method of claim 1, wherein the uplink signal is transmitted according to a codebook-based transmission scheme or a non-codebook based transmission scheme.

7. A method for operating a transmission reception point (TRP) in a wireless communication system, the method comprising:

   transmitting at least one radio resource control (RRC) parameter and at least one of DCI to a terminal; and
   receiving an uplink signal from the terminal,
   wherein the uplink signal is transmitted according to an uplink signal transmission scheme that is determined as one of single DCI-based transmission scheme and multi DCI-based transmission scheme based on the at least one RRC parameter and the at least one of DCI, and

wherein the uplink signal transmission scheme is determined as the multi DCI-based transmission scheme in a case in which the at least one RRC parameter configures use of two sounding reference signal (SRS) resource sets and includes two indexes indicating different control resource set (CORESET) pools and an SRS resource set indicator is omitted in the at least one of DCI.

8. The method of claim 7, wherein the at least one RRC parameter further includes a parameter that indicates the uplink signal transmission scheme as the multi-DCI based transmission scheme.

9. The method of claim 7, wherein, when the at least one RRC parameter does not include the indexes indicating different CORESET pools, the uplink signal is transmitted by the single DCI-based transmission scheme.

10. The method of claim 7, wherein the two indexes indicating different CORESET pools are associated with the two SRS resource sets.

11. The method of claim 7, wherein the at least one of DCI schedules different physical uplink shared channels (PUSCHs).

12. The method of claim 7, wherein the uplink signal is transmitted according to a codebook-based transmission scheme or a non-codebook based transmission scheme

13. A terminal in a wireless communication system, the terminal comprising:

at least one transmitter;
at least one receiver;
at least one processor; and
at least one memory operably coupled to the at least one processor and storing instructions that cause, when executed, the at least one processor to perform a specific operation,
wherein the specific operation includes:

receiving at least one RRC parameter and at least one of DCI from a TRP;
determining an uplink signal transmission scheme as one of single-DCI based transmission scheme and multi-DCI based transmission scheme based on the at least one RRC parameter; and
transmitting an uplink signal to the TRP according to the determined uplink signal transmission scheme, and the uplink signal transmission scheme is determined as the multi-DCI based transmission scheme in a case in which the at least one RRC parameter configures use of two sounding reference signal (SRS) resource sets and includes two indexes indicating different control resource set (CORESET) pools, and an SRS resource set indicator is omitted in the at least one of DCI.

14. A transmission reception point (TRP) operating in a wireless communication system, the TRP comprising:

at least one transmitter;
at least one receiver;
at least one processor; and
at least one memory operably coupled to the at least one processor and storing instructions that cause, when executed, the at least one processor to perform a specific operation,
wherein the specific operation includes:

transmitting at least one RRC parameter and at least one of DCI to a terminal; and
receiving an uplink signal from the terminal,
wherein the uplink signal is transmitted according to an uplink signal transmission scheme that is determined as one of single DCI-based transmission scheme and multi DCI-based transmission scheme based on the at least one RRC parameter and the at least one of DCI, and
wherein the uplink signal transmission scheme is determined as the multi DCI-based transmission scheme in a case in which the at least one RRC parameter configures use of two SRS resource sets and includes two indexes indicating different CORESET pools and an SRS resource set indicator is omitted in the at least one of DCI.

FIG. 1

FIG. 2

WIRELESS DEVICE — 200
270

210 CONTROL UNIT
240 TRANSCEIVER

220 MEMORY
250 INPUT UNIT

230 POWER SOURCE UNIT
260 OUTPUT UNIT

FIG. 3

FIG. 4A

EP 4 734 642 A1

410

411 412 413 414 415 416

DATA → CHANNEL CODING AND MODULATION → S-to-P → N IFFT → P-to-S → CP ADDITION → UC → SIGNAL

FIG. 4B

FIG. 5

FIG. 6

SUBFRAME(1ms)

| SLOT #0 | SLOT #1 | ・・・ | SLOT #n |

FIG. 7

SLOT

| #0 | #1 | #2 | #3 | #4 | #5 | #6 | #7 | #8 | #9 | #10 | #11 | #12 | #13 |

OFDM SYMBOL

FIG. 8

FIG. 9

EP 4 734 642 A1

FIG. 10

FIG. 11

FIG. 12

```
        UE                              TRP(s)
         |                                 |
         |<- - RRC PARAMETER(S1210) - - - -|
         |                                 |
         |<---- DCI(s)(S1220) -------------|
         |                                 |
         |----- UPLINK SIGNAL(S1230) ----->|
         |                                 |
```

FIG. 13

```
              UE                              TRP(s)
               |                                 |
               |<- - RRC PARAMETER(S1310) - - - -|
               |                                 |
               |<---- DCI(s)(S1320) -------------|
     ┌─────────────────────────────┐             |
     │ DETERMINE MULTI DCI/SINGLE   │             |
     │ DCI-BASED TRANSMISSION       │~S1330       |
     │ SCHEME BASED ON RRC PARAMETER│             |
     └─────────────────────────────┘             |
     ┌─────────────────────────────┐             |
     │ DETERMINE UPLINK SIGNAL      │             |
     │ TRANSMISSION SCHEME AS       │~S1340       |
     │ FIRST SCHEME BASED ON        │             |
     │ RRC PARAMETER AND DCI        │             |
     └─────────────────────────────┘             |
               |----- UPLINK SIGNAL(S1350) ----->|
               |                                 |
```

FIG. 14

EP 4 734 642 A1

START

S1410
ARE TWO
DIFFERENT TCI STATES
APPLIED?

NO

YES

S1421
RRC PARAMETER
INDICATES SFN SCHEME-BASED
TRANSMISSION?

S1422
RRC PARAMETER
INDICATES SFN SCHEME-BASED
TRANSMISSION?

YES

NO

NO

YES

S1431
DETERMINE SFN SCHEME-BASED
UPLINK SIGNAL TRANSMISSION SCHEME

S1432
DETERMINE MTRP TDM SCHEME-BASED
UPLINK SIGNAL TRANSMISSION SCHEME

S1433
DETERMINE SFN SCHEME-BASED
UPLINK SIGNAL TRANSMISSION SCHEME

S1434
DETERMINE TDM SCHEME-BASED
UPLINK SIGNAL TRANSMISSION SCHEME

END

FIG. 15

START
↓
S1510 — IS RRC PARAMETER OBTAINED? — NO
↓ YES

S1521 — RRC PARAMETER INDICATES SDCI/MDCI-BASED TRANSMISSION? — NO
↓ YES

S1531 — DETERMINE TRANSMISSION SCHEME OF UPLINK SIGNAL BASED ON DCI-BASED SCHEME INDICATED BY RRC PARAMETER

S1522 — ARE TWO CORESETPOOL INDEXES OBTAINED?
YES → S1532 — DETERMINE MULTI DCI-BASED TRANSMISSION SCHEME AS TRANSMISSION SCHEME OF UPLINK SIGNAL
NO → S1533 — DETERMINE SINGLE DCI-BASED TRANSMISSION SCHEME AS TRANSMISSION SCHEME OF UPLINK SIGNAL

↓
END

FIG. 16

EP 4 734 642 A1

FIG. 16

FIG. 17

```
                    ┌─────────────┐
                    │    START    │
                    └──────┬──────┘
                           │
                           ▼
                         ╱   ╲
                       ╱  IS TDM ╲           S1710
              ╱ SCHEME-BASED TRANSMISSION ╲      NO
               ╲      SUPPORTED?      ╱─────────────┐
                 ╲                 ╱                │
                   ╲     │YES    ╱      S1720       │
                     ╲   │     ╱                    │
                       ▼                            │
        ┌──────────────────────────────────┐       │
        │  REPEATEDLY TRANSMIT UPLINK       │       │
        │  SIGNAL BASED ON TDM SCHEME       │       │
        └──────────────┬───────────────────┘       │
                       │                            │
                       ▼                            │
                ┌─────────────┐                     │
                │     END     │◄────────────────────┘
                └─────────────┘
```

FIG. 18

UE                    TRP(s)

TRANSMIT UPLINK SIGNAL
BASED ON FIRST SCHEME(S1810)

RRC PARAMETER(S1820)

DCI(s)(S1830)

DETERMINE MULTI DCI-BASED/SINGLE
DCI-BASED TRANSMISSION SCHEME    S1840
BASED ON RRC PARAMETER

DETERMINE UPLINK SIGNAL
TRANSMISSION SCHEME AS SECOND SCHEME    S1850
BASED ON RRC PARAMETER AND DCI

TRANSMIT UPLINK SIGNAL
BASED ON SECOND SCHEME(S1860)

FIG. 19

```
                    ┌──────────┐
                    │  START   │
                    └────┬─────┘
                         │
                         ▼                    S1910
              ╱─────────────────────╲            NO
             ╱   IS RRC PARAMETER     ╲──────────────────┐
             ╲      CHANGED?          ╱                   │
              ╲─────────┬────────────╱                    │
                   YES  │        S1921                    │         S1922
                        ▼                                 ▼
         ┌──────────────────────────┐      ┌──────────────────────────┐
         │ SWITCH DCI-BASED TRANSMISSION │  │  MAINTAIN DCI-BASED       │
         │     SCHEME BASED ON       │      │  TRANSMISSION SCHEME      │
         │  CHANGED RRC PARAMETER    │      └───────────┬──────────────┘
         └────────────┬─────────────┘                  │
                      │                                 │
                      ▼◄────────────────────────────────┘
                 ┌──────────┐
                 │   END    │
                 └──────────┘
```

FIG. 20

```
                    ┌──────────┐
                    │  START   │
                    └────┬─────┘
                         │
                         ▼                    S2010
              ╱─────────────────────╲            NO
             ╱   ARE RRC PARAMETER    ╲──────────────────┐
             ╲   AND DCI CHANGED?     ╱                   │
              ╲─────────┬────────────╱                    │
                   YES  │        S2021                    │         S2022
                        ▼                                 ▼
         ┌──────────────────────────┐      ┌──────────────────────────┐
         │  SWITCH UPLINK TRANSMISSION │    │   MAINTAIN UPLINK         │
         │   SCHEME BASED ON CHANGED   │    │   TRANSMISSION SCHEME     │
         │    RRC PARAMETER AND DCI     │    └───────────┬──────────────┘
         └────────────┬─────────────┘                  │
                      │                                 │
                      ▼◄────────────────────────────────┘
                 ┌──────────┐
                 │   END    │
                 └──────────┘
```

FIG. 21

```
            ┌─────────────┐
            │    START    │
            └──────┬──────┘
                   │                              S2110
         ┌─────────▼─────────────────────────────┐
         │  RECEIVE AT LEAST ONE RRC PARAMETER    │
         │   AND AT LEAST ONE DCI FROM TRP        │
         └─────────┬──────────────────────────────┘
                   │                              S2120
         ┌─────────▼──────────────────────────────┐
         │ DETERMINE UPLINK SIGNAL TRANSMISSION    │
         │   SCHEME AS ONE OF SINGLE DCI-BASED     │
         │   TRANSMISSION SCHEME AND MULTI         │
         │   DCI-BASED TRANSMISSION SCHEME BASED   │
         │   ON AT LEAST ONE RRC PARAMETER         │
         └─────────┬──────────────────────────────┘
                   │                              S2130
         ┌─────────▼──────────────────────────────┐
         │ TRANSMIT UPLINK SIGNAL TO TRP ACCORDING │
         │  TO DETERMINED UPLINK SIGNAL TRANSMISSION│
         │  SCHEME                                 │
         └─────────┬──────────────────────────────┘
                   │
            ┌──────▼──────┐
            │     END     │
            └─────────────┘
```

## INTERNATIONAL SEARCH REPORT

| International application No. |
|---|
| **PCT/KR2024/011909** |

| A. | CLASSIFICATION OF SUBJECT MATTER |
|---|---|

**H04W 72/232**(2023.01)i; **H04L 5/00**(2006.01)i; **H04W 72/21**(2023.01)i; **H04W 72/1268**(2023.01)i

According to International Patent Classification (IPC) or to both national classification and IPC

| B. | FIELDS SEARCHED |
|---|---|

Minimum documentation searched (classification system followed by classification symbols)

H04W 72/232(2023.01); H04L 5/00(2006.01); H04W 72/23(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RRC 파라미터(parameter), 단일 DCI(single DCI), 다중 DCI(multi-DCI), 상향링크 (uplink), SRS 자원 세트(resource set), CORESET 풀(pool), 인덱스(index)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | QUALCOMM INCORPORATED. Simultaneous multi-panel transmission. R1-2305323, 3GPP TSG RAN WG1 #113. Incheon, Korea. 14 May 2023.<br>See pages 1-17. | 1-14 |
| A | SPREADTRUM COMMUNICATIONS. Discussion on UL precoding indication for multi-panel transmission. R1-2304547, 3GPP TSG RAN WG1 #113. Incheon, Korea. 15 May 2023.<br>See pages 1-15. | 1-14 |
| A | CATT. Further discussion on UL precoding indication for multi-panel transmission. R1-2304710, 3GPP TSG RAN WG1 #113. Incheon, Korea. 15 May 2023.<br>See pages 1-13. | 1-14 |
| A | MODERATOR (OPPO). Summary #1 on Rel-18 STxMP. R1-2301819, 3GPP TSG RAN WG1 #112. Athens, Greece. 28 February 2023.<br>See pages 1-52. | 1-14 |
| A | US 2023-0216639 A1 (INTEL CORPORATION) 06 July 2023 (2023-07-06)<br>See paragraphs [0024]-[0058] and figures 4-11. | 1-14 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 October 2024** | **30 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/011909**

| Patent document cited in search report | Publication date (day/month/year) | Patent family member(s) | | Publication date (day/month/year) |
|---|---|---|---|---|
| US 2023-0216639 A1 | 06 July 2023 | BR 112022025274 | A2 | 17 January 2023 |
| | | EP 4183203 | A1 | 24 May 2023 |
| | | EP 4183203 | A4 | 01 May 2024 |
| | | JP 2023-532843 | A | 01 August 2023 |
| | | US 2023-0198719 | A1 | 22 June 2023 |
| | | WO 2022-011159 | A1 | 13 January 2022 |
| | | WO 2022-011527 | A1 | 20 January 2022 |

Form PCT/ISA/210 (patent family annex) (July 2022)